# EUROPÄISCHE PATENTSCHRIFT

(11) **EP 0 360 900 B1**
(45) Veröffentlichungstag und Bekanntmachung des Hinweises auf die Patenterteilung: **02.06.1993**
(21) Anmeldenummer: 88116011.3
(22) Anmeldetag: 28.09.1988
(51) Int. Cl.: G06F 9/46

(54) **Verfahren zur Behandlung der von den einzelnen Prozessen einer Datenverarbeitungsanlage verursachten Arbeitsaufrufe an einen der Prozesse**
Method for treating work calls to one of the processes from the single processes of a data processing system
Méthode pour le traitement des appels de travail à un processus par les processus singuliers d'un système de traitement de données

(43) Veröffentlichungstag der Anmeldung: 04.04.1990
(73) Patentinhaber: Siemens Nixdorf Informationssysteme Aktiengesellschaft, 33102 Paderborn (DE)
(72) Erfinder: Hülters, Hubert, D-8152 Feldkirchen/Westerham (DE)
(74) Vertreter: Fuchs, Franz-Josef, Dr.-Ing.

(56) Entgegenhaltungen:
- EP-A- 0 052 713
- WO-A-81/02477
- IBM TECHNICAL DISCLOSURE BULLETIN, Band 27, Nr. 10B, März 1985, Seiten 5967-5968, New York, US; "Virtual machine group control system dispatching program"

## Beschreibung

Die Erfindung betrifft ein Verfahren zur Behandlung der von den einzelnen Prozessen einer Datenverarbeitungsanlage verursachten Arbeitsaufrufe an einen der Prozesse, wobei die Arbeitsaufrufe in eine der Prozeßebene des aufzurufenden Prozesses zugeordnete Warteschlange eingereiht werden, entsprechend dem Oberbegriff des Patentanspruches 1.

Ein Prozeß umfaßt in der Regel eine von der Datenverarbeitungsanlage zu erbringende Arbeitseinheit, deren Ablauf in der Ausführung eines beliebig unterbrechbaren sequentiellen Programms mit gegebenem Adressenraum besteht, wobei ein übergeordnetes Betriebsprogramm die Prozesse gründet und auflöst, ihnen Betriebsmittel zuweist und entzieht, die notwendige Kommunikation zwischen den Prozessen sichert und das Fortschreiten der Prozesse gewährleistet. An das Betriebsprogramm werden auch die Benutzeraufträge als Aufforderung zur Arbeitsleistung gerichtet "Taschenbuch der Informatik" von Steinbuch, 3. Auflage 1974, Band 2, Seiten 195 bis 231.

Gerade beim Einsatz von Datenverarbeitungsanlagen zur Verfahrenssteuerung oder in Verbindung mit vielen Datenstationen müssen die von der Datenverarbeitungsanlage zu erfüllenden Arbeitsaufträge so abgewickelt werden, daß die Antwortzeiten der Datenverarbeitungsanlage den vorgegebenen zeitlichen Anforderungen genügen und die vorhandenen Betriebsmittel dazu möglichst günstig genutzt werden. Das erfordert vielfach die Unterbrechung eines laufenden Prozesses und die Umschaltung auf einen Prozeß höherer Priorität.

Anforderungen an Prozesse einer Datenverarbeitungsanlage können sowohl durch externe als auch interne Ereignisse ausgelöst werden, die in der Regel durch prioritätsbehaftete Unterbrechungssignale angezeigt werden. Diese müssen überwacht und bewertet werden, damit unabhängig von der Reihenfolge ihres Auftretens vordringlichere Anforderungen mit höherer Priorität bevorzugt behandelt werden können. Andererseits müssen die erfaßten und bewerteten Anforderungen zwischengespeichert und entsprechend ihrer Priorität an die jeweiligen Prozesse weitergeleitet und diese zum Ablauf gebracht werden.

Die Organisation der Behandlung von Unterbrechungsanforderungen und Prozeßaufrufen innerhalb einer Datenverarbeitungsanlage ist daher von sehr großer Bedeutung für deren Leistungsfähigkeit und deren Einsatzfähigkeit. Möglichkeiten dieser Organisation sind in "Elektronische Rechenanlagen", 22. Jahrgang (1980), Heft 1, Seiten 14 bis 21, aufgezeigt, während "Siemens-Zeitschrift", 47 (1973), Heft 5, Seiten 359 bis 364 und IBM Technical Disclosure Bulletin, Vol. 21, No. 9, Feb. 1979, Seiten 3501 bis 3504 Beispiele für die Unterteilung in prioritätsgestaffelte Unterbrechungs- und Ausführungsebenen zeigen, wobei beim letzteren Beispiel zusätzliche Warteschlangen für programmierte Anforderungen in den unteren Ebenen gezeigt sind.

Ein weiteres Beispiel ist auch aus EP-A-0 052 713 bekannt. Dort werden Unterbrechungsanforderungen und Prozeßaufrufe durch das Betriebssystem verwaltet. Dabei verfügt jeder aufgerufene Prozess über mehrere Warteschlangen, auf die die entsprechenden Anforderungen und Aufrufe je nach eingetragener Priorität verteilt werden, wobei innerhalb einer Warteschlange nochmals nach Prioritäten sortiert wird. Dadurch wird jedoch pro Anforderung bzw. Aufruf das Betriebssystem involviert. Dieses überprüft ferner zur Verteilung auf die entsprechenden Warteschlange die Prioritätszuordung und nimmt jeweils noch die Einordnung innerhalb einer Schlange vor. All dies beansprucht Rechenzeit, die aufgrund der unterschiedlichen Größe der Warteschlangen auch noch stark variieren kann.

Die Eingliederung von Arbeitsaufrufen in die jeweilige Warteschlange kann entweder durch das übergeordnete Betriebsprogramm oder durch den jeweils laufenden Prozeß selbst ausgeführt werden. In jedem Falle sind die gemeinsamen Betriebsmittel, wie z.B. die Verarbeitungseinheit oder der Prozessor, während des Eintragungsvorganges blockiert. In Echtzeitsystemen, beispielsweise mit Verarbeitung von über Übertragungsleitungen auszutauschenden Daten, die teilweise einer sehr schnelle Reaktion des Systems auf Unterbrechungsereignisse erfordern, wobei die Unterbrechungsereignisse Arbeitsaufrufe an andere Prozesse verursachen können, ist es erforderlich, daß der Eintragungsvorgang eines solchen Arbeitsaufrufes in die zuständige Warteschlange entsprechend schnell durchgeführt werden kann. Beispielsweise können im Rahmen der Datenübertragung nach jedem Zeichen infolge einer Blockendeerkennung neben der eigentlichen Zeichenbehandlung Mehrfachaufwendungen für die Blockendebehandlung erforderlich werden, die dann durch einen entsprechenden Arbeitsaufruf an den zuständigen Prozeß auf eine weniger zeitkritische Prozeßebene verlagert werden können. Die Dauer für die Zeichenbehandlung einschließlich des Absetzens des Arbeitsaufrufes an den weiterführenden Prozeß bestimmt in diesem Falle bei einem vorgegebenen Mindestzeichenabstand für die Datenübertragung im wesentlichen die Anzahl der bedienbaren Übertragungsleistungen. Je kürzer daher die gemeinsamen Betriebsmittel für derartige Aufgaben blockiert sind, um so schneller kann daher auf ein neues Unterbrechungsereigniss reagiert werden und um so mehr Zeichenkanäle können sicher bedient werden.

Es ist daher Aufgabe der Erfindung, ein Verfahren der eingangs genannten Art so zu gestalten, daß der Zeitaufwand für die Eintragung von Arbeitsaufrufen in die jeweilige Warteschlange möglichst klein ist und durch eine darauf abgestimmte Gestaltung des die Weiterleitung der zwischengespeicherten Arbeitsaufrufe an den zugehörigen Prozeß bestimmenden Teiles des Betriebsprogrammes die Leistungsfähigkeit der Datenverarbeitungsanlage bezüglich der Bewältigung von Echtzeitanforderungen gesteigert wird.

Diese Aufgabe wird durch die kennzeichnenden Merkmale des Patentanspruches 1 gelöst.

Die neue Lösung beruht dabei im wesentlichen auf dem Zusammenwirken mehrerer Maßnahmen:
a) Bei Verwendung eines Warteschlangensystems ohne Ordnungsprobleme für die prioritätsbehafteten Arbeitsaufrufe mit einfacher Ansteuerung der Speicherelemente in den einzelnen Warteschlangen durch je einen Eintrags- und je einen Austragszeiger.
b) Eintragung eines Arbeitsaufrufes allein durch den jeweils veranlassenden Prozeß unter Verzweigung in ein Eintragungsunterprogramm, das in dem jeweils zu belegenden Speicherelement abgelegt ist, und ohne Belastung durch normale Verwaltungsaufgaben für die jeweilige Warteschlange.
c) Ansteuerung des jeweiligen Eintragungsunterprogrammes über das durch den jeweiligen Eintragszeiger ansteuerbare Steuereintragsfeld des jeweils vorangehenden Speicherelementes und Einstellung des Befehlszählers am Ende eines jeden Eintragungsunterprogrammes auf das Steuereintragsfeld des belegten Speicherelementes zur Bildung des neuen Eintragszeigers vor Rückkehr in das den Aufrufbefehl ausführende Programm.
d) Aufteilung des die Austragung und Weiterleitung eines Arbeitsaufrufes ausführenden Teils des Betriebsprogrammes in mehrere Programmabschnitte mit der Möglichkeit, zwischen den Programmabschnitten Unterbrechungsanforderungen durch echtzeitkritische Ereignisse entgegenzunehmen.

Durch das Zusammenwirken der ersten drei Maßnahmen mit einer einfachen Verzweigung ins jeweilige Eintragungsunterprogramm entfällt eine zeitraubende Kontext-Sicherung beim Aussprung ins Unterprogramm und die Wiederherstellung des Kontextes bei der Rückkehr in das den Aufrufbefehl ausführende Programm, wobei der jeweils neue Eintragszeiger in einfacher Weise durch Modifikation des Befehlszählerstandes ableitbar ist. Der nicht unterbrechbare kritische Pfad des Programmlaufes für die Eintragung des jeweiligen Arbeitsaufrufes bis zur Bereitstellung des neuen Eintragszeigers wird daher optimal verkürzt, und Arbeitsaufrufe können daher in sehr kurzer Zeit abgesetzt werden. Damit diese Verkürzung voll zum Tragen kommen kann, wird durch die vierte Maßnahme gleichzeitig sichergestellt, daß nicht durch zu lange kritische Programmpfade des Betriebsprogrammes beim Austragen und Weiterleiten eines zwischengespeicherten Arbeitsaufrufes das Absetzen der von echtzeitkritischen Ereignissen auszulösenden Arbeitsaufrufe zu lange blockiert wird. Die weniger zeitkritischen Arbeiten auf einer Prozeßebene niedrigerer Priorität sind damit leichter zugunsten der Arbeiten auf Prozeßebenen mit höherer Priorität verdrängbar, und die Datenverarbeitungsanlage ist dadurch insgesamt effektiver zugunsten der echtzeitkritischen Prozesse gestaltbar.

Weiterbildungen des der Erfindung zugrundeliegenden Lösungsgedankens ergeben sich aus den weiteren Patentansprüchen.

Einzelheiten der Erfindung seien nachfolgend anhand eines in der Zeichnung dargestellten Ausführungsbeispieles näher erläutert. Im einzelnen zeigen
- FIG 1: ein Prinzipschaltbild für eine Datenverarbeitungsanlage gemäß der Erfindung,
- FIG 2: eine funktionsbezogene Einteilung der Prozeßebenen von FIG 1 mit einem Warteschlangensystem in einer der Prozeßebenen,
- FIG 3: die Zusammensetzung der Adresse für das Auffinden einer Warteschlange,
- FIG 4: die Adressenverknüpfung der Warteschlangenelemente in einer Warteschlange mit zwei Speicherelementen,
- FIG 5: die Erweiterung der Warteschlange von FIG 4 um ein weiteres Speicherelement infolge Belegung mit einem zweiten Arbeitsaufruf vor Austrag des ersten Arbeitsaufrufes,
- FIG 6: den Zustand der Warteschlange von FIG 5 nach Beginn des Austrags für den ersten Arbeitsaufruf vor Eintreffen eines dritten Arbeitsaufrufes,
- FIG 7: den Zustand der Warteschlange von FIG 6 nach Beginn des Austrags für den zweiten Arbeitsaufruf vor Eintreffen eines vierten Arbeitsaufrufes,
- FIG 8: den Zustand er Warteschlange von FIG 6 bei Eintreffen eines vierten Arbeitsaufrufes nach Beginn des Austrags für den ersten Arbeitsaufruf,
- FIG 9: eine Übersicht der Adressenbeziehungen zum Auffinden eines für die Einspeicherung bzw. Ausspeicherung eines Arbeitsaufrufes anzusteuernden Speicherelementes einer Warteschlange,
- FIG 10: den Aufbau eines der die Warteschlangen bildenden Speicherelemente,
- FIG 11: ein Flußdiagramm für den Ablauf eines Prozesses PZi,
- FIG 12: ein das Flußdiagramm von FIG 11 ergänzendes Flußdiagramm für die Ausführung eines einen Arbeitsaufruf verursachenden Aufrufbefehles,
- FIG 13: ein Flußdiagramm für die im Flußdiagramm von FIG 12 enthaltene Einrichtungsroutine zum Einrichten einer noch nicht existierenden Warteschlange,
- FIG 14: ein Flußdiagramm für die im Flußdiagramm von FIG 12 enthaltene Einkettungsroutine zur Erweiterung einer Warteschlange um ein weiteres Speicherelement,
- FIG 15: ein das Flußdiagramm von FIG 12 ergänzendes Flußdiagramm für die Ausführung der Eintragung eines Arbeitsaufrufes in ein Speicherelement,
- FIG 16: ein Flußdiagramm für die Zuteilung eines zur Behandlung freigegebenen Arbeitsaufrufes an den zuständigen Prozeß und
- FIG 17: ein das Flußdiagramm von FIG 16 ergänzendes Flußdiagramm für die Austragung eines Arbeitsaufrufes aus einem Speicherelement.

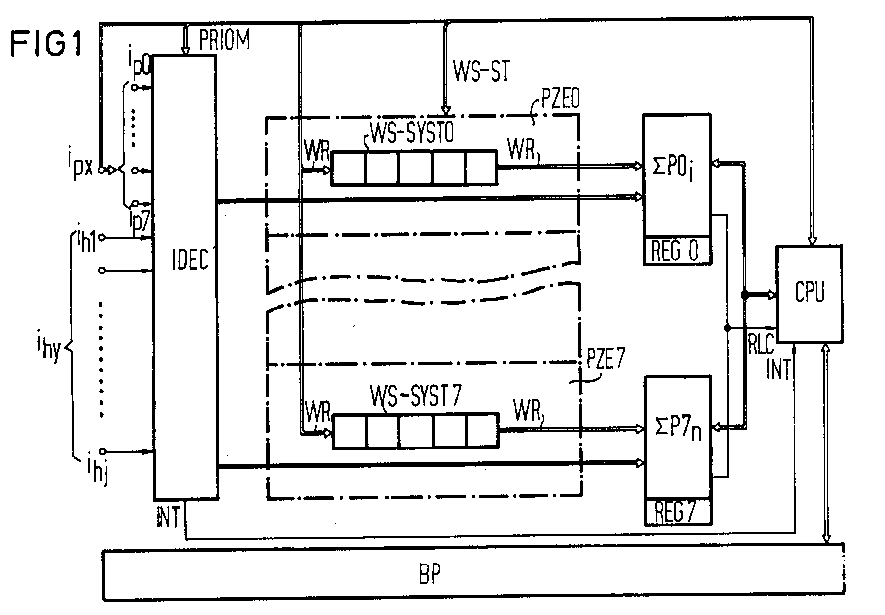

Das Prinzipschaltbild von FIG 1 zeigt im rechten Teil eine Verarbeitungseinheit CPU als gemeinsames Betriebsmittel für acht Gruppen von Prozessen ΣP0ᵢ bis ΣP7ₙ, die verschiedenen Prozeßebenen PZE0 bis PZE7 der Anlage individuell zugeordnet sind. Als weitere Prozeßgruppe ist im unteren Teil der FIG 1 die der übergeordneten Betriebsprogramme BP vorgesehen, die in gleicher Weise mit der Verarbeitungseinheit CPU zusammenarbeiten.

Den einzelnen Prozeßgruppen ist jeweils eines der individuellen Warteschlangensysteme WS-SYST0 bis WS-SYST7 zugeordnet, in denen programmbedingte Arbeitsaufrufe WR an die einzelnen Prozesse, z.B. P0ᵢ, der jeweiligen Prozeßebene, z.B. PZE0, anhand der Steuerinformation WS-ST zwischengespeichert werden, bis sie an den jeweils zugehörigen Prozeß weitergeleitet und ausgeführt werden können.

Welcher der Prozesse jeweils durch Zuteilung der Verarbeitungseinheit CPU zum Ablauf gebracht wird, hängt von der Einrichtung IDEC im linken Teil von FIG 1 ab, der alle einen Arbeitsaufruf WR kennzeichnenden Ereignisse iₓₓ als Unterbrechungsanforderungen mitgeteilt werden.

Diese Unterbrechungsanforderungen können sowohl durch interne als auch durch externe Unterbrechungsereignisse ausgelöst werden, wobei zwischen programmbedingten und sonstigen durch die Hardware der Anlage ausgelösten Unterbrechungsanforderungen zu unterscheiden ist.

In FIG 1 sind diese beiden Gruppen mit iₚₓ und mit i_{hy} bezeichnet, wobei sich die Gruppe iₚₓ auf die programmbedingten Anforderungen bezieht, zu denen in die Warteschlangen Arbeitsaufrufe WR eingetragen sind. Während in der Gruppe i_{hy} für jedes Ereignis ein eigener Eingang iₕₗ bis iₕⱼ mit individueller Prioritätseinstufung vorgesehen ist, weist die Gruppe iₚₓ für jede Unterbrechungs- und Prozeßebene PZE0 bis PZE7 nur einen Eingang, z.B. iₚ₀ für die Prozeßebene PZE0, auf, der mit der entsprechenden Priorität gewichtet ist.

Allen Anforderungseingängen iₓₓ ist innerhalb der Einrichtung IDEC in bekannter Weise eine bistabile Kippstufe als Anzeigeelement für das Vorliegen einer Anforderung zugeordnet, die bei Auftreten der Anforderung gesetzt und bei Weiterleitung der Anforderung als Arbeitsaufruf an den zuständigen Prozeß wieder zurückgesetzt wird.

Mit allen diesen bistabilen Anzeigeelementen ist des weiteren ein Prioritätsnetzwerk gekoppelt, das jeweils die Anforderung mit der höchsten Priotitätseinstufung auswählt. Die Priorität dieser ausgewählten Anforderung wird dann mit der Priorität der Prozeßebene des jeweils laufenden Prozesses verglichen, und nur wenn die Priorität der ausgewählten Anforderung höher ist, wird von der Einrichtung IDEC ein die Unterbrechung des laufenden Prozesses herbeiführendes Signal INT ausgelöst und damit die ausgewählte Anforderung zur Behandlung freigegeben.

Die als Vergleichswert dienende Priorität ist also veränderbar und wird für jeden Prozeßlauf mit der Steuerinformation PRIOM zur Einstellung eines z.B. als Maske arbeitenden Registers neu vorgegeben.

Die Einrichtung IDEC arbeitet vollkommen unabhängig von den Prozessen und kann mit dem Signal INT jederzeit eine Unterbrechung der Nutzprozesse ΣP0ᵢ bis ΣP7ₙ und eine Umschaltung auf die Betriebsprogramme BP herbeiführen, die dann den weiteren Steuerungsablauf bestimmen.

Ebenso kann am Ende eines jeden abgelaufenen Prozesses oder bei einer Behinderung eines Prozeßlaufs, z.B. infolge eines Übergangs in den Wartezustand, durch den jeweiligen Prozeß die gemeinsame Verarbeitungseinheit CPU mit dem Signal RLC freigegeben und damit die Steuerung an die übergeordneten Betriebsprogramme BP übergeben werden.

Um nach Auslösung der Signale INT oder RLC sicherzustellen, an welchem Prozeß die jeweils zur Behandlung freigegebene Unterbrechungsanforderung als Arbeitsaufruf weiterzuleiten ist, ist mit jedem Anforderungseingang iₓₓ ein Register für eine Hinweisadresse gekoppelt, die bei Anforderungen über die Eingänge der Gruppe i_{hy} unmittelbar auf den zugehörigen Prozeßkontrollblock und bei programmbedingten Anforderungen über die Eingänge der Gruppe iₚₓ auf das jeweils zugehörige Warteschlangensystem, z.B. WS-SYST0, verweist.

Außerdem ist für jede Prozeßgruppe ΣP0ᵢ bis ΣP7ₚ noch ein Speicher, z.B. einer der Registersätze REG0 bis REG7, zur Zwischenspeicherung und Sicherung der für die Fortsetzung eines unterbrochenen Prozesses notwendigen Daten vorgesehen.

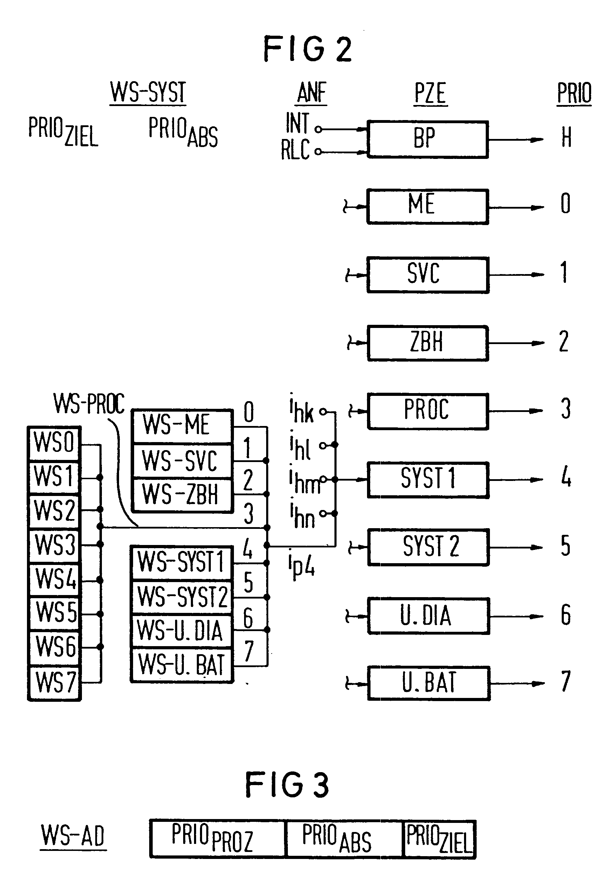

FIG 2 zeigt im rechten Teil die verschiedenen Prozeßebenen PZE mit ihrer jeweiligen Priorität PRI0 in der Reihenfolge ihres Prioritätsranges, wobei die höchste Priorität den Betriebsprogrammen BP als oberste Prozeßebene zugeordnet ist, die lediglich durch die Signale INT und RLC als Anforderung ANF aufrufbar ist. Die darunterliegenden Prozeßebenen sind folgenden Funktionen mit Bezug auf ein Datenübertragungssystem zugeordnet:
- ME:: Behandlung von Maschinenfehlern
- SVC:: Ausführung von Supervisoraufgaben
- ZBH:: Bedienung von Leitungspuffern und Zeichenbehandlung
- PROC:: Ausführung von Leitungsprozeduren, z.B. Blockendebehandlung, Nachrichtentransport
- SYST1:: Ausführung von Systemfunktionen
- SYST2:: Ausführung von Systemfunktionen, z.B. Speicherverwaltung und Zuteilung
- U.DIA:: Ausführung von Benutzerfunktionen bei Dialogbetrieb
- U.BAT:: Ausführung von Benutzerfunktionen bei Stapelbetrieb

Wie sich aus den einzelnen Funktionen ergibt, genießt im Rahmen der Datenübertragung die Bedienung der Leitungspuffer und die Zeichenbehandlung die höchste Priorität, da hierbei die Übertragungsgeschwindigkeit der Zeichen und die zu bedienende Anzahl von Übertragungsleitungen äußerst geringe Reaktionszeiten erfordern. Nicht so zeitkritische Anforderungen sind mit der Ausführung der Leitungsprozeduren verbunden, während demgegenüber die unterstützende Systemfunktionen, wie Speicherverwaltung für die Nachrichten, Quittungsmeldung usw., die auch in einer einzigen Prozeßebene zusammengefaßt sein können, weniger zeitkritisch und mehr einem Wartesystem zuzurechnen sind. Letzteres gilt dann insbesondere für die mit der Verarbeitung von Benutzeraufträgen verbundene Ausführung von Benutzerfunktionen, wobei der Dialogbetrieb, wie im vorliegenden Fall angenommen, vorrangig vor dem Stapelbetrieb behandelt werden kann.

In jeder dieser Prozeßebenen PZE werden nun die durch die dieser Prozeßebene zugeordneten Unterbrechungsereignisse iₓₓ ausgelösten Arbeitsaufrufe nach ihrer Freigabe zur Behandlung den zuständigen Prozessen zugeleitet. Als Beispiel sind in FIG 2 die auf die Prozeßebene PZE4 zur Ausführung von Systemfunktionen SYST1 bezogenen Ereignisse iₕₖ bis iₕₙ und iₚ₄ in der Rangfolge mit fallender Priorität innerhalb der Prozeßebene als Anforderung ANF angegeben, so daß bei Freigabe dieser Prozeßebene zur Bearbeitung von Arbeitsaufrufen zunächst die Einzelaufrufe in der Folge iₕₖ, iₕₗ, iₕₘ und iₕₙ bearbeitet werden und dann die im Rahmen des Gruppenaufrufes iₚ₄ vorliegenden programmbedingten Arbeitsaufrufe, die in einem gemäß der Erfindung ausgebildeten Warteschlangensystem WS-SYST zwischengespeichert sind.

Dieses ebenfalls nur für die Prozeßebene PZE4 zur Ausführung von Systemfunktion SYST1 dargestellte Warteschlangensystem WS-SYST besteht aus einer der Anzahl der vorhandenen Prozeßebenen PZE0 bis PZE7 entsprechenden Anzahl von Warteschlangen WS-...., von denen jeweils eine einer der Prozeßebenen individuell mit gleicher Prioritätseinstufung zugeordnet ist, also z.B. die Warteschlange WS-ZBH mit der Priorität 2 der Prozeßebene PZE2 für die Zeichenbehandlung ZBH.

Bei Freigabe eines durch das Gruppenereignis iₚ₄ angezeigten Arbeitsaufrufes werden - ohne zwischenzeitlich auftretende weitere Unterbrechungen - zunächst immer die Arbeitsaufrufe aus der Warteschlange mit der höchsten Prioritätseinstufung bearbeitet, bevor Arbeitsaufrufe aus einer Warteschlange mit niedrigerer Priorität bearbeitet werden. Für die Bearbeitung der in den Warteschlangen zwischengespeicherten Arbeitsaufrufe ist also immer die Priorität PRIO_{ABS} der Prozeßebene maßgebend, der der den Aufruf veranlassende Prozeß als Absender angehört, während die Priotität des aufzurufenden Prozesses PRIO_{PROZ} die Prozeßebene bestimmt, in der die Warteschlange für den zwischenzuspeichernden Arbeitsaufruf zu finden ist.

Das hat zur Folge, daß die jeweils anzusteuernde Warteschlange durch einfache Adressenbildung aus den beiden Priotitätsangaben PRIO_{PROZ} und PRIO_{ABS} entsprechend der Konfiguration der Prozesse identifizierbar und auswählbar ist, wie die Darstellung der Warteschlangenadresse WS-AD in FIG 3 zeigt, und daß die Arbeitsaufrufe frei von irgendwelchen, die Bearbeitungsreihenfolge festlegenden Angaben zwischengespeichert werden können, da sich ihre Prioritätseinstufung allein aus dem Ort und der Reihenfolge der Zwischenspeicherung ergibt.

Zur weiteren Differenzierung der Arbeitsrangfolge von Arbeitsaufrufen kann, wie in FIG 2 weiterhin für die Warteschlange WS-PROC gezeigt ist, die einzige Warteschlange durch eine Gruppe prioritätsgestaffelter Warteschlangen, z.B. WS0 bis WS7, mit den zusätzlichen Prioritäten PRIO_{ZIEL}, z.B. der Stufung 0 bis 7 in fallender Richtung, ersetzt werden. Auf diese Weise können Arbeitsaufrufe von Prozessen derselben Prozeßebene und damit derselben Priorität PRIO_{ABS} bei den auftragsausführenden Prozessen mit unterschiedlicher Priorität PRIO_{ZIEL} bearbeitet werden, wobei diese Priorität vom auftraggebenden Prozeß festgelegt wird. In diesem Fall bildet gemäß FIG 3 die zusätzliche Angabe PRIO_{ZIEL} einen weiteren Adressenteil der die jeweilige Warteschlange bestimmenden Adresse WS-AD. Auch gilt hierfür in gleicher Weise, daß zunächst alle Arbeitsaufrufe aus der Warteschlange mit der jeweils höchsten Prioritätseinstufung weitergeleitet werden, bevor Arbeitsaufrufe aus einer Warteschlange mit niedrigerer Prioritätseinstufung zur Bearbeitung gelangen. Jedoch wird dadurch die absenderbezogene Bearbeitungsreihenfolge für die Arbeitsaufrufe durch die anderen auftraggebenden Prozesse nicht beeinträchtigt, sondern durch die entsprechend der Priorität PRIO_{ZIEL} vorgesehenen Warteschlangen wird lediglich die Bearbeitung innerhalb der zugehörigen Prozeßebene unterteilt.

Das in FIG 2 nur für eine Prozeßebene, nämlich die Prozeßebene SYST1, gezeigte Warteschlangensystem WS-SYST kann in gleicher Weise für mehrere oder gar alle Prozeßebenen vorgesehen werden, so daß den von der Datenverarbeitungsanlage und im Hinblick auf deren Einsatz gestellten Anforderungen in vielfältiger Weise entsprochen werden kann.

Dabei ist es vollkommen unerheblich, ob, wie in den meisten Fällen und auch in FIG 1 gezeigt, nur eine einzige Verarbeitungseinheit CPU als gemeinsames Betriebsmittel für alle Prozeßebenen zur Verfügung steht, oder ob für jede Prozeßebene eine individuelle Verarbeitungseinheit vorgesehen wird, wobei im letzteren Falle die in FIG 1 gezeigte Struktur für die einzelnen Prozeßebenen vorzusehen ist und die einzelnen Prioritätsstufen innerhalb der einzelnen Prozeßebene wie die Prozeßebenen von FIG 1 behandelt werden, d.h. die Einrichtungen IDEC und die Betriebsprogramme BP als gesonderte Prozeßgruppe sind für jede Prozeßebene mit individueller Verarbeitungseinheit gesondert vorzusehen. Auch braucht bei Freigabe der Verarbeitungseinheit durch einen Prozeß lediglich die Prioritätslage innerhalb der zugehörigen Prozeßebene und das zugehörie Warteschlangesystem überprüft zu werden.

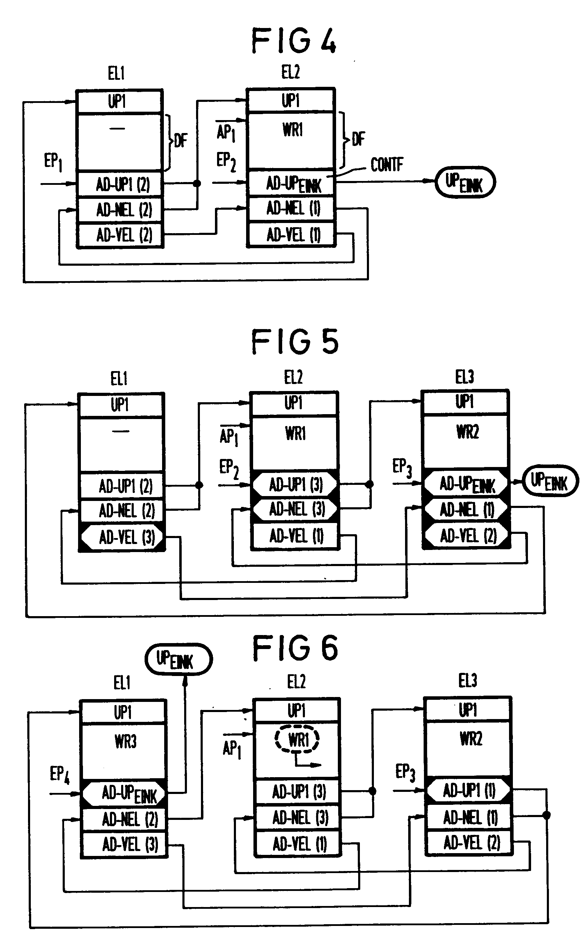

Anhand von FIG 4 bis FIG 8 wird nachfolgend der Aufbau und die Wirkungsweise der in den einzelnen Prozeßebenen verwendeten Warteschlangen WS näher erläutert. Von Vorteil ist dabei insbesondere der geringe Steuerungsaufwand für die Einhaltung des FIFO-Prinzips für die jeweils zwischenzuspeichernden Arbeitsaufrufe und die damit verbundene Entlastung insbesondere der Eintragungsvorgänge von Verwaltungsaufgaben. Aufträge an die über eine solche Warteschlange erreichbaren Prozesse können daher schneller abgesetzt und die die Aufträge veranlassenden Prozesse schneller beendet werden, so daß die von diesen Prozessen benutzten gemeinsamen Betriebsmittel schneller wieder zur Verfügung stehen.

FIG 4 zeigt eine aus der Mindestanzahl von zwei Speicherelementen EL1 und EL2 bestehende Warteschlange. Jedes Speicherelement weist neben dem eigentlichen Datenfeld DF für die jeweils zwischenzuspeichernde Information drei Eintragsfelder auf, nämlich ein Adresseneintragsfeld für die Adresse AD-NEL, die auf den Beginn des Datenfeldes im vorangehenden Speicherelement verweist, ein Adresseneintragsfeld für die Adresse AD-VEL, die auf das Adresseneintragsfeld für die Vorwärtsverknüpfung des jeweils nachfolgenden Speicherelementes verweist, und ein Steuereintragsfeld CONTF. Dieses Steuereintragsfeld enthält entweder die Adresse AD-NEL aus dem zugehörigen Adresseneintragsfeld für die Vorwärtsverknüpfung als Startadresse AD-UP1 für das in jedem Speicherelement abgespeicherte Eintragungsunterprogramm UP1 und verweist damit auf das nächste zur Zwischenspeicherung von Informationen bereite Speicherelement, oder es enthält als Sperreintrag einen Eintrag zur Sonderbehandlung, der gleichzeitig das Ende der belegbaren Warteschlange anzeigt und entweder zur Abweisung einer weiteren Zwischenspeicherungsanforderung führt oder mit dem Eintrag AD-UP_{EINK} auf eine Einkettungsroutine für die Erweiterung der Warteschlange verweist.

In allen, die Darstellung einer Warteschlange treffenden Figuren sind die Ziele dieser Einträge durch entsprechende Verbindungspfeile zwischen den Speicherelementen EL... verdeutlicht, während die in Klammern gesetzten Ziffern in den einzelnen Adresseneintragsfeldern den Nummern, z.B. 1 bis 3 der betreffenden Speicherelemente, z.B. EL1 bis EL3, entsprechen.

Am Anfang der Datenfelder DF ist jeweils noch ein Eintragsfeld für die Kennzeichnung des "Frei"- bzw. "Belegt"-Zustandes vorgesehen, um die Überprüfung des Belegtzustandes zu vereinfachen, was später noch erläutert wird.

Der Eintragszeiger EP... ist jeweils auf das Steuereintragsfeld CONTF gerichtet, während der Austragszeiger AP... jeweils auf den Beginn des Datenfeldes DF gerichtet ist, wobei die jeweilige Adresse sich jeweils aus der Adresse für das Speicherelement und einer entsprechenden Distanzadresse ergibt.

Da der Eintragszeiger EP1 für die erste Zwischenspeicherungsanforderung auf das Speicherelement EL1 zeigt, ist der Austragszeiger AP1 für die erste Ausspeicherung auf das Speicherelement EL2 gerichtet, und das Speicherelement EL2 führt demzufolge den Eintrag AD-UP_{EINK} für die Sonderbehandlung. Folglich wird bei der ersten Zwischenspeicherungsanforderung über den aktuellen Eintragszeiger EP1 das Speicherelement EL2 belegt, was durch den Eintrag WR1 im zugehörigen Datenfeld DF angezeigt ist, und bei der zweiten Zwischenspeicherungsanforderung wird über den Eintragszeiger EP2 das Speicherelement EL2 angesteuert. Da im Steuereintragsfeld CONTF dieses Speicherelementes ein Eintrag AD-UP_{EINK} zur Sonderbehandlung enthalten ist, kann die mit der zweiten Zwischenspeicherungsanforderung verbundene Einspeicherung zunächst nicht vorgenommen werden, sondern es muß gewartet werden, bis ein belegtes Speicherelement wieder freigeworden ist, oder erst ein weiteres Speicherelement EL3 in die Warteschlange eingekettet werden.

In vielen Anwendungsfällen ist die Länge der Warteschlangen nicht von vornherein absehbar. Ist die Anzahl der vorgegebenen Speicherelemente zu klein gewählt, läuft man Gefahr, daß zuviele Zwischenspeicherungsanforderungen abgewiesen werden müssen. Ist dagegen die Anzahl zu groß, wird unnötige Speicherkapazität gebunden. Es ist daher vorteilhaft, wenn die Warteschlange entsprechend den jeweiligen betrieblichen Erfordernissen hinsichtlich der Anzahl ihrer Speicherelemente erweiterbar ist.

Dieses Erfordernis läßt sich bei dem gewählten Aufbau der Warteschlange in einfacher Weise erfüllen. Erforderlich ist dazu lediglich, daß der jeweilige Sperreintrag nicht zu einer Zurückweisung einer Zwischenspeicherungsanforderung führt, sondern zur Einkettung eines neuen Speicherelementes, das dann die durch die neue Zwischenspeicherungsanforderung bedingte Zwischenspeicherung ermöglicht.

Dieser Fall ist ausgehend von der Warteschlange gemäß FIG 4 in FIG 5 dargestellt. Die auf den Eintragszeiger EP2 bezogene Zwischenspeicherungsanforderung führt in diesem Falle nicht zu einer Zurückweisung der Zwischenspeicherungsanforderung, sondern aufgrund des Eintrags AD-UP_{EINK} im angesteuerten Steuereintragsfeld zum Einketten eines dritten Speicherelementes EL3 in die Warteschlange. Bevor dieses Speicherelement EL3 zur Aufnahme der neuen Information WR2 bereitgestellt werden kann, müssen jedoch die Einträge in den jeweils betroffenen Speicherelmenten ergänzt bzw. geändert werden.

Betroffen sind jeweils drei Speicherelemente, nämlich das neu einzukettende Speicherelement EL3, das die Einkettung auslösende Speicherelement EL2 und das diesem bisher nachfolgende Speicherelement EL1. Die betroffenen Eintragsfelder dieser Speicherelemente EL3, EL2 und EL1 sind mit Eckdreiecken gekennzeichnet.

Dazu wird zunächst beim neuen Speicherelement EL3 als ELn in dessen Steuereintragsfeld CONTF der Sperreintrag AD-UP_{EINK} eingetragen. In dem durch den aktuellen Eintragszeiger, z.B. EP2, gekennzeichneten Speicherelement, z.B. EL2 als ELn-1, wird dann das Adresseneintragsfeld für die Vorwärtsadresse AD-NEL gelesen und in das entsprechende Eintragsfeld des neuen Speicherelementes ELn = EL3 eingetragen. Weiterhin wird das durch diesen Eintrag gekennzeichnete bisherige Vorgängerelement EL1 als Speicherelement ELn+1 angesteuert, die dortige Rückwärtsadresse AD-VEL gelesen und in das entsprechende Eintragsfeld des neuen Speicherelementes EL3 = ELn übertragen, während in das gelesene Adresseneintragsfeld des Speicherelementes EL1 als ELn+1 die Adresse des neuen Speicherelementes EL3 als AD-VEL eingetragen wird. Anschließend wird noch im durch den Eintragszeiger EP2 gekennzeichneten Speicherelement EL2 als Speicherelement ELn-1 die Hinweisadresse auf das neu eingekettete Speicherelement EL3 in das Eintragsfeld für die Vorwärtsadresse AD-NEL und in das Steuereintragsfeld CONTF eingetragen. Das neue Speicherelement EL3 ist damit in die bestehende Kette eingegliedert, wobei durch die Übernahme des Sperreintrags in dieses Element das bisher sperrende Speicherelement EL2 die Entgegennahme der mit dem Eintragszeiger EP2 verbundenen zweiten Zwischenspeicherungsanforderung bei Wiederholung zuläßt.

Wie aus FIG 4 und FIG 5 ersichtlich, blockiert der Sperreintrag die Entgegennahme einer weiteren Zwischenspeicherungsanforderung, obwohl ein Speicherelement, nämlich EL1, noch frei ist. Dieses muß aber frei bleiben, damit nach einem Leerwerden der Warteschlange der aktuelle Eintragszeiger EP... immer auf das Vorgängerelement zum aktuellen Austragszeiger AP... zeigt, um eine sichere Arbeitsweise der Warteschlange zu gewährleisten. Andernfalls müßte man wie bei den bekannten Anordnungen gesonderte Maßnahmen zur Schaffung einer Überholsperre ergreifen.

Um dennoch über dieses freie Speicherelement, z.B. EL1, früher, d.h. vor Abschluß der dieses Element zur Belegung freigebenden Ausspeicherung, verfügen zu können, kann die Freigabe bereits zu Beginn einer einzuleitenden Ausspeicherung erfolgen. Dies ist in FIG 6 angedeutet.

Beim zuerst belegten Speicherelement EL2 ist die Ausspeicherung eingeleitet, was durch den Pfeil am umrandeten Informationseintrag WR1 angedeutet ist. Der Sperreintrag AD-UP_{EINK} ist damit vom Speicherelement EL3 an das zyklisch nachfolgende Speicherelement EL1 weitergegeben worden, so daß eine nachfolgende dritte Zwischenspeicherungsanforderung über den Eintragszeiger EP3 keine Sonderbehandlung auslöst, sondern an das Speicherelement EL1 weitergeleitet werden kann.

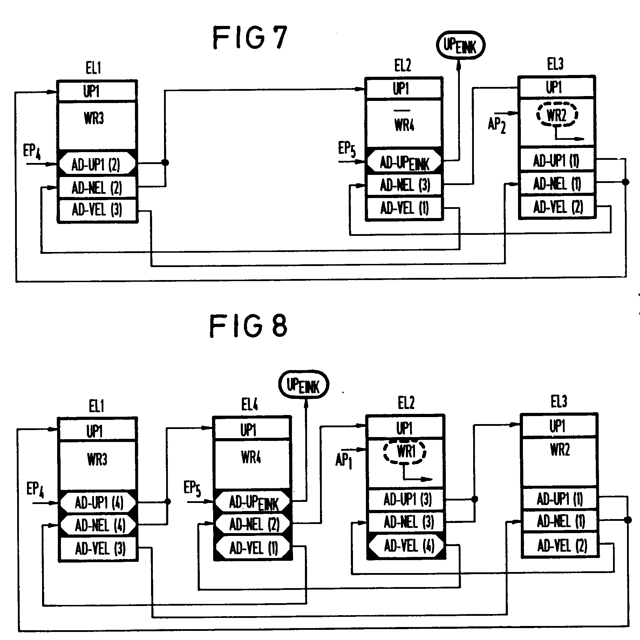

Eine nachfolgende vierte Zwischenspeicherungsanforderung über den Eintragszeiger EP4 würde dagegen wieder auf den Sperreintrag treffen. Diese käme gemäß FIG 7 erst zum Zuge, wenn der Austragszeiger AP1 am Ende der ersten Ausspeicherung auf den Austragszeiger AP2 umgestellt und dazu eine neue Ausspeicherungsanforderung eingetroffen ist, der zufolge die zweite Ausspeicherung bereits eingeleitet wäre; usw..

FIG 8 zeigt schließlich die Entwicklung der Warteschlange von FIG 6, wenn nach dem Einketten des Speicherelementes EL3 und dessen Belegung die auf den Eintragszeiger EP4 bezogene vierte Zwischenspeicherungsanforderung eintrifft, bevor der durch den Austragszeiger AP1 ausgelöste Ausspeichervorgang abgeschlossen und auf den neuen Austragszeiger AP2 umgesteuert ist. In diesem Falle wird wie bei FIG 4 oder FIG 5 erst ein weiteres Speicherelement EL4 eingekettet, das dann die auf den Eintragszeiger EP4 bezogene Zwischenspeicherungsanforderung bedienen kann.

Zur Ansteuerung einer Warteschlange sind also lediglich zwei Speicherabschnitte, z.B. Register, zur Bereitstellung des Eintragszeigers EP... und des Austragszeigers AP... erforderlich. Trifft eine Zwischenspeicherungsanforderung ein, kann mit Hilfe des aktuellen Eintragszeigers EP... sofort das zugehörige Speicherelement EL... aufgerufen und anhand des Adresseneintrags im Steuereintragsfeld CONTF auf das zu belegende Speicherelement zugegriffen werden oder die Anforderung führt aufgrund des Sperreintrags zu einer Sonderbehandlung. Andererseits erreicht man bei einer Ausspeicherungsanforderung anhand des aktuellen Austragszeigers AP... unmittelbar das Speicherelement, das als erstes zur Ausspeicherung von Informationen ansteht. Ist dieses nicht belegt, was zweckmäßig anhand eines Eintragsfeldes zu Beginn des Datenfeldes DF überprüft wird, kann keine Ausspeicherung vorgenommen werden. Dann liegt aber auch in den anderen Speicherelementen EL... der Warteschlange keine Zwischenspeicherung vor. Ist das Datenfeld dagegen belegt, erfolgt vor der eigentlichen Ausspeicherung zweckmäßig die Weitergabe des Sperreintrags, um das bisher gesperrte Speicherelement schneller für eine weitere Zwischenspeicherungsanforderung verfügbar zu machen.

Die von der Weitergabe des Sperreintrags AD-UP_{EINK} betroffenen Speicherelemente EL... und Eintragsfelder sind in FIG 6 und FIG 7 gleichfalls durch Eckdreiecke gekennzeichnet. Zunächst wird im durch den Austragszeiger AP... aufgefundenen Speicherelement als Speicherelement ELn anhand des Adresseneintrags AD-VEL das vorangehende Speicherelement ELn-1 ermittelt und im Steuereintragsfeld CONTF der Sperreintrag vorgenommen. Danach wird anhand der Adresse AD-VEL in diesem Speicherelement das dazu vorangehende Speicherelement ELn-2 ermittelt und dort die Adresse AD-NEL aus dem dortigen Adresseneintragsfeld in das Steuereintragsfeld CONTF übertragen. Der Sperreintrag in diesem Steuereintragsfeld ist damit gelöscht. Stattdessen wird auf das Element ELn-1 als aufnahmebereites Speicherelement verwiesen.

Frei werdende Speicherelemente können gegebenenfalls auch wieder ausgekettet werden. Ausgangspunkt hierfür ist eine Überprüfung des jeweils nächstfolgenden Speicherelementes, auf das der Adresseneintrag AD-NEL für die Vorwärtsverknüpfung hinweist und auf das der Austragszeiger AP... nach Freigabe eines Speicherelementes einzustellen ist. Ist nämlich dieses Speicherelement nicht mehr belegt, dann sind voraussetzungsgemäß auch alle übrigen Speicherelemente der Warteschlange nicht belegt. Das freigewordene Speicherelement kann daher ausgekettet werden, wenn die Anzahl der Speicherelemente in der Warteschlange größer ist als die erforderliche Mindestanzahl von zwei Speicherelementen. Dies läßt sich in einfacher Weise daran erkennen, ob die beiden Adresseneinträge im frei gewordenen oder auch im nachfolgenden Speicherelement übereinstimmen oder nicht. Nur im letzten Falle kann freigegeben werden.

Um bei der Auskettung eines Speicherelementes die Adressenverknüpfung innerhalb der Kette aufrechtzuerhalten, muß im, dem jeweils frei gewordenen Speicherelement n nachfolgenden Speicherelement n+1 der Adresseneintrag AD-VEL für die Rückwärtsverknüpfung auf den des frei werdenden Speicherelementes n und im durch diesen Adresseneintrag bestimmten vorausgehenden Speicherelement n-1 der Adresseneintrag AD-NEL für die Vorwärtsverknüpfung auf den des frei werdenden Speicherelementes n umgestellt werden. Nach der Auskettung eines Speicherelementes wird der Austragszeiger auf das nächstfolgende Speicherelement umgestellt. Der Auskettungsvorgang kann gegebenenfalls wiederholt werden, bis schließlich keine Auskettung mehr möglich ist.

Die Einkettung eines neuen Speicherelementes und gegebenenfalls die Auskettung eines Speicherelementes erfordern zwar einen zusätzlichen Steuerungsaufwand in Form einer zusätzlichen Einkettungsroutine bzw. zusätzliche Steuervorgänge. Dieser Aufwand fällt aber gegenüber den durch die dynamische Anpassungsmöglichkeit gegebenen Vorteilen nicht weiter ins Gewicht, da in vielen Fällen die notwendige Reaktion auf eine abgewiesene Zwischenspeicherungsanforderung wesentlich größere Belastungen und Zeitverluste verursacht.

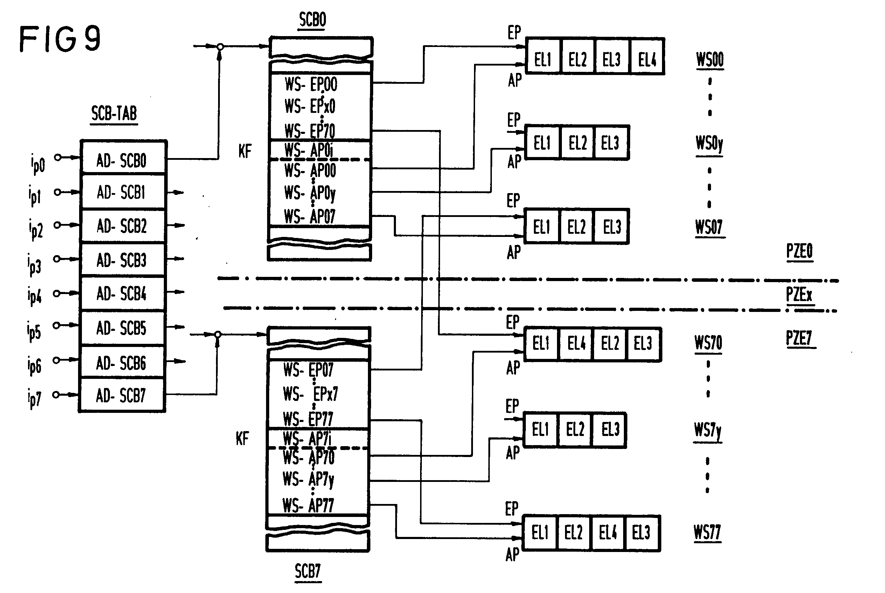

FIG 9 zeigt eine Übersicht der gegebenen Adressenbeziehungen zum Auffinden des jeweils benötigten Eintrags- bzw. Austragszeigers EPxy bzw. APxy.

Der rechte Teil von FIG 9 zeigt die entsprechend den Prozeßebenen PZE0 bis PZE7 gegliederten Warteschlangen WS00 bis WS77 mit ihren Speicherelementen EL..., die in der bereits beschriebenen Weise über einen Eintragszeiger EP und einen Austragszeiger AP auswählbar sind. Diese Zeiger werden in Tabellen der jeweiligen Systemkontrollblöcke SCB0 bis SCB7 geführt, von denen jeweils einer einer der Prozeßebenen PZE0 bis PZE7 individuell zugeordnet ist und die in üblicher Weise mit den Steuerdaten für den jeweils laufenden Prozeß belegbar sind. Zu diesen Systemkontrollblöcken SCB... haben die auf der zugehörigen Prozeßebene PZE... jeweils ablaufenden Prozesse einen unmittelbaren Zugriff, während programmbedingte Unterbrechungensanforderungen, für die je Prozeßebene PZE... nur ein gemeinsamer Eingang i_{p...} vorgesehen ist, zunächst eine Zuweisungstabelle SCB-TAB aufsuchen müssen, um über die zugeordnete Adresse AD-SCB... den zugehörigen Systemkontrollblock SCB... ansteuern zu können.

Jeder dieser Systemkontrollblöcke SCB0 bis SCB7 weist, wie bereits erwähnt, eine Tabelle für die Austragszeiger, z.B. WS-AP01 bis WS-AP07 im Systemkontrollblock SCB0, auf, von denen jeweils einer den einzelnen Warteschlangen WS00 bis WS07 der zugehörigen Prozeßebene PZE0 individuell zugeordnet ist, da ein Austrag aus einer der Warteschlangen einer vorgegebenen Prozeßebene immer nur durch eine auf diese Prozeßebene bezogene Unterbrechungsanforderung ausgelöst werden kann. Entsprechend verweist bei der gewählten zweistelligen Numerierung für die Warteschlangen und die Zeiger die erste Stelle immer auf die Rangziffer der zugehörigen Prozeßebene PZE... und die letzte Stelle immer auf die Rangziffer innerhalb dieser Prozeßebene.

Den Austragszeigern WS-AP... ist gegebenenfalls noch ein Eintragsfeld für einen weiteren Austragszeiger WS-AP0i als Kopffeld KF vorgeordnet, was bei einer später noch zu erläuternden Betriebsweise zu Vereinfachungen des Steuerungsablaufes führt.

Für die Tabellen der Eintragszeiger WS-EP... in den einzelnen Systemkontrollblöcken SCB... gilt ein anderes Zuordnungsprinzip, da von jeder Prozeßebene PZE... aus Aufträge an alle Prozeßebenen vergeben werden können und in jeder Prozeßebene nur eine einzige Warteschlange als Ziel angesteuert werden kann, die der gleichen Prioritätsstufe wie die auftraggebende Prozeßebene zugeordnet ist. Dementsprechend enthält die Tabelle für die Eintragszeiger eines Systemkontrollblocks, z.B. SCB0, für jede der Prozeßebene PZE0 bis PZE7 nur einen Eintragszeiger, z.B. WS-EP00 für die Warteschlange WS00 in der Prozeßebene PZE0, WS-EPx0 für die Warteschlange WSx0 in der Prozeßbene PZEx und schließlich WS-EP70 für die Warteschlange WS70 in der Prozeßebene PZE7. Entsprechend der gültigen einheitlichen zweistelligen Numerierung für die Warteschlangen und die Zeiger ist in jeder Tabelle bei den Austragszeigern WS-AP... immer die erste Stelle und bei den Eintragszeigern WS-EP... immer die letzte Stelle konstant.

Die Auswahl der Eintragszeiger WS-EP... erfolgt dabei ausgehend von einer Ausgangsadresse für das zugehörige Tabellenfeld durch die Warteschlangenadresse WS-AD von FIG 3 als Distanzadresse, während die Austragszeiger WS-AP... jeweis vom Beginn der zugehörigen Tabelle ausgehend nacheinander angesteuert und die dadurch gekennzeichneten Warteschlangen nacheinander auf das Vorliegen eines zwischengespeicherten Arbeitsaufrufes überprüft werden.

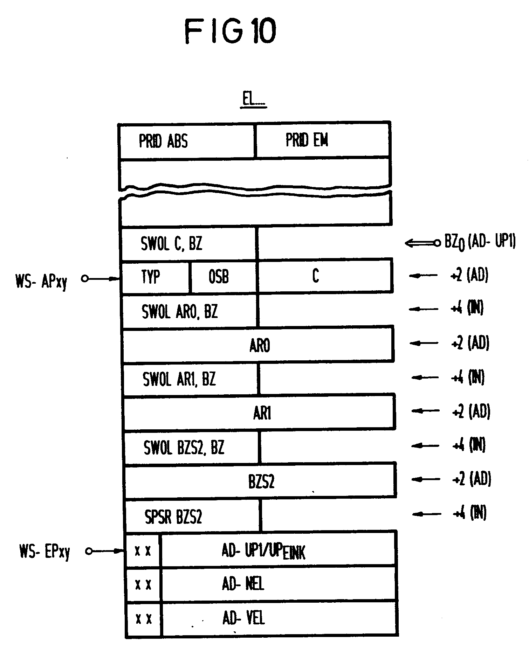

FIG 10 zeigt schließlich den Aufbau der die einzelnen Warteschlangen bildenden Speicherelemente EL.... Im unteren Teil davon befinden sich die drei für die Steuerung und die Verwaltung der Warteschlangen notwendigen Eintragsfelder für den Steuereintrag AP-UP1/UP_{EIINK}, den in Vorwärtsrichtung auf das vorausgehende Speicherelement verweisenden Adresseneintrag AD-NEL und den in Rückwärtsrichtung auf das nachfolgende Speicherelement verweisenden Adresseneintrags AD-VEL, wobei der Eintragszeiger WS-EPxy der zugehörigen Warteschlange WSxy immer auf das Steuereintragsfeld verweist. Die mit XX belegten Abschnitte dieser Eintragsfelder können beispielsweise mit Diagnosehinweisen belegt werden.

Die übrigen Eintragsfelder beinhalten in Auswirkung der Erfindung die einzelnen Befehle des Eintragungsprogrammes UP1 und die das Datenfeld DF bildenden Informationen. Diese Befehle und Informationen können in getrennten Feldern des Speicherelementes jeweils für sich zusammengefaßt oder aber, wie in FIG 10 dargestellt, zumindestens teilweise miteinander abwechselnd angeordnet sein, so daß aus dem jeweiligen Befehlszählerstand durch Erhöhen um die jeweilige Befehlslänge die Adresse für das den betroffenen Informationsteil aufnehmende Eintragsfeld und durch Erhöhen um die jeweilige Länge des Informationsteiles die Adresse für das den nächsten Befehl beinhaltende Eintragsfeld ableitbar ist.

Der Ausgangszählerstand BZ0 für den Befehlszähler wird dabei immer durch den Eintrag AD-UP1 im Steuereintragsfeld geliefert. Dies ist am rechten Rand des dargestellten Speicherelementes angedeutet, wobei ausgehend vom Befehlszählerstand BZ0 durch Erhöhen um zwei Byte die Einspeicheradresse AD für den jeweils betroffenen Informationsteil und durch Erhöhen um vier Byte die Befehlsadresse IN für den nächsten Befehl gewonnen wird.

Unabhängig von der gewählten Anordnung wird aus dem letzten Befehlszählerstand des Eintragungsprogrammes UP1 unmittelbar die Adresse für das Steuereintragsfeld AD-UP1/UP_{EINK} abgeleitet, so daß diese unmittelbar als Eintragszeiger EP... für die Eintragung eines nachfolgenden Arbeitsaufrufes in das nächste Speicherelement verwendet werden kann.

Das jeweils in jedem Speicherelement EL... vorgesehene Programm zur Eintragung ist damit als Unterprogramm organisch in das Programm einbeziehbar, das den den Arbeitsaufruf veranlassenden Befehl XGOLxx ausführt, ohne daß mit dem Unterprogrammaufruf eine Kontextsicherung und Wiederherstellung zur Registerfreistellung und eine gesonderte Adressenberechnung für den Eintragszeiger EP... notwendig wird. Auch entfallen wegen der zugrundegelegten Strukturierung der Warteschlangen gesonderte Steuervorgänge für die Anfang-/Ende-Überwachung sowie für die Überwachung des "Voll"-Zustandes, was normalerweise Auswirkungen auf den neu zu bildenden Eintragszeiger hat und damit die Dauer der Eintragung des Arbeitsaufrufes verlängern würde.

Im vorliegenden Fall wird das Eintragungsunterprogramm UP1 von den Schreibbefehlen SWOL... gebildet, von denen die ersten drei Befehle die Übernahme der den Arbeitsaufruf bestimmenden Informationsteile C, AR0 und AR1 aus gleich bezeichneten Schnittstellenregistern bewirken. Der vierte Schreibbefehl SWOL BZS2, BZ, mit dem die in einem Register gesicherte Rücksprungadresse in das Eintragsfeld BZS2 übernommen wird, ist entbehrlich. Hierdurch werden in erster Linie Diagnosefunktionen erleichtert.

Der letzte Befehl SPSR BZS2 sichert dann durch Einstellen des Befehlszählers auf das Steuereintragsfeld und durch Austausch des erreichten Befehlszählerstandes mit dem Inhalt des die Rücksprungadresse sichernden Registers die Rückkehr in das den Aufrufbefehl XGOLxx ausführende Programm bei gleichzeitiger Sicherstellung der den neuen Eintragszeiger EP... für die Warteschlange bildenden Adresse, worauf später noch eingegangen wird.

Der Austragszeiger APxy wird immer auf das durch den ersten Befehl des Eintragungsunterprogrammes UP1 betroffene Eintragsfeld eingestellt. Dieses Eintragsfeld enthält neben dem Abschnitt für die Teilinformation C noch zwei Abschnitte für die Einträge OSB und TYP. Der Eintrag OSB kennzeichnet den jeweiligen Operationszustand für das Speicherelement. Dieser Eintrag wird bei Belegung des Speicherelementes beispielsweise auf den Wert "0000" gesetzt, während der Wert "1111" den Freizustand kennzeichnet. Zwischen diesen Werten liegende Werte können dann zur Kennzeichnung des beim Austragen jeweils erreichten Zustandes verwendet werden, was ebenfalls noch näher erläutert wird.

Der Eintrag TYP kennzeichnet den jeweiligen Aufbautyp des Speicherelementes, wenn mehrere unterschiedlich aufgebaute Speicherelemente zur Verfügung zu stellen sind, weil z.B. für die von unterschiedlichen Prozessen ausgelösten Arbeitsaufrufe neben den reinen Schnittstelleninformationen noch weitere Informationen, z.B. für die Kontextherstellung oder für Diagnosezwecke, bereitzustellen sind. Dies ist durch den zusätzlichen oberen Teil des dargestellten Speicherelementes angedeutet. Die Kapazität aller Speicherelemente richtet sich daher immer nach dem Aufbautyp mit dem größten Speicherbedarf. Bei Verwendung nur eines Aufbautyps wird der zugehörige Eintrag TYP auf den Wert "0000" eingestellt und damit der auf die Eintragungen durch das Eintragungsunterprogramm UP1 beschränkte Grundtyp gekennzeichnet, wie er vorangehend erläutert wurde.

Bei der Ausführung des ersten Befehles des Eintragungsunterprogrammes UP1 werden die Einträge TYP und OSB zweckmäßig immer auf den Wert "0000" eingestellt, und sollte ein anderer Aufbautyp für die Ausführung des Aufrufbefehls XGOLxx benötigt werden, dann ist der Eintrag TYP durch das den Aufrufbefehl ausführende Programm entsprechend zu ändern.

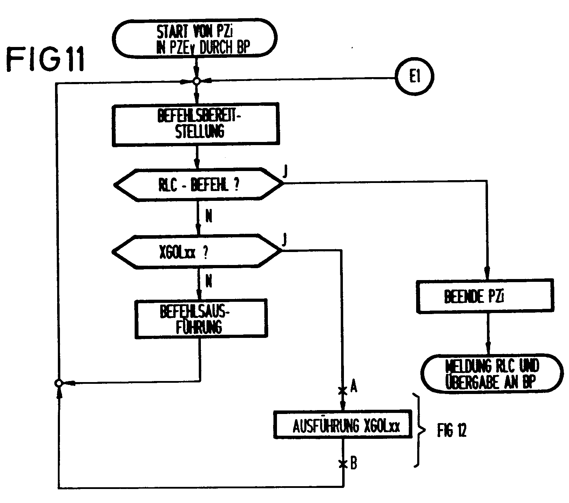

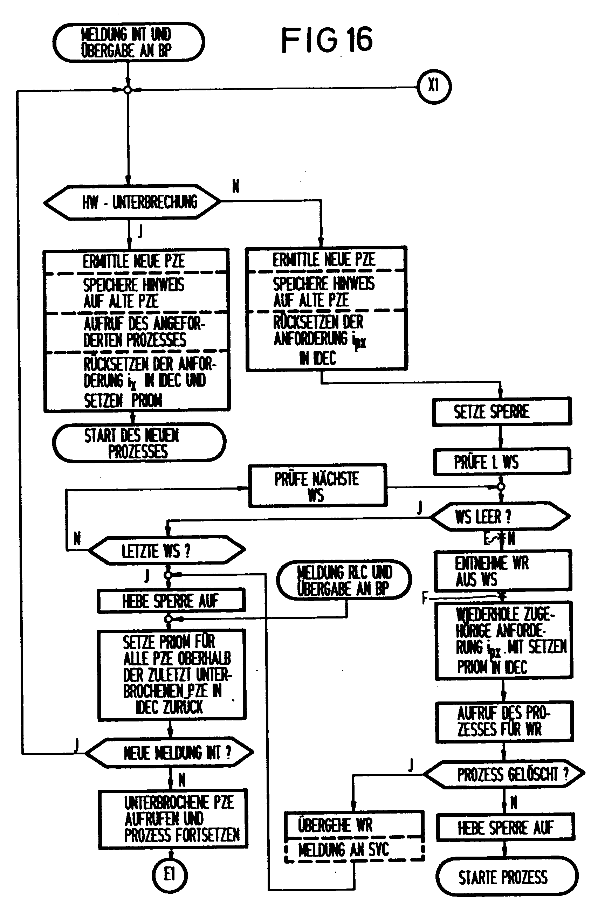

Die Arbeitsweise der Anordnung von FIG 1 in Verbindung mit dem beschriebenen Warteschlangensystem wird nachfolgend anhand der Flußdiagramme von FIG 11 bis FIG 17 erläutert, wobei sich das Flußdiagramm von FIG 11 auf den normalen Ablauf der einzelnen Prozesse und die Eintragung von durch diesen veranlaßten Arbeitsaufrufen WR in die jeweilige Warteschlange im Rahmen des jeweiligen Prozeßlaufes und das Flußdiagramm von FIG 16 auf den die Behandlung von Unterbrechungen betreffenden Teil der Betriebsprogramme BP bezieht.

Nach Start eines Prozesses PZi durch das Betriebsprogramm BP wird gemäß FIG 11 in an sich bekannter Weise ein Befehl nach dem anderen des jeweils zugehörigen Programmes abgearbeitet. Dabei wird bei jeder Befehlsbereitstellung geprüft, ob ein RLC-Befehl vorliegt und daher der Prozeßlauf mit Freigabe der Verarbeitungseinheit CPU zu beenden ist, so daß die Steuerung wieder auf das Betriebsprogramm BP übergeht, um den nächsten Prozeß aufzurufen.

Liegt kein RLC-Befehl vor, wird geprüft, ob gegebenenfalls ein einen Arbeitsaufruf veranlassender Aufrufbefehl XGOLxx zu bearbeiten ist. Ist dies nicht der Fall, so wird in an sich bekannter Weise der bereitgestellte und überprüfte Befehl ausgeführt, sowie anschließend der nächste Befehl aufgerufen usw., bis schließlich der letzte Befehl des Programms den Prozeßablauf in der bereits beschriebenen Weise beendet.

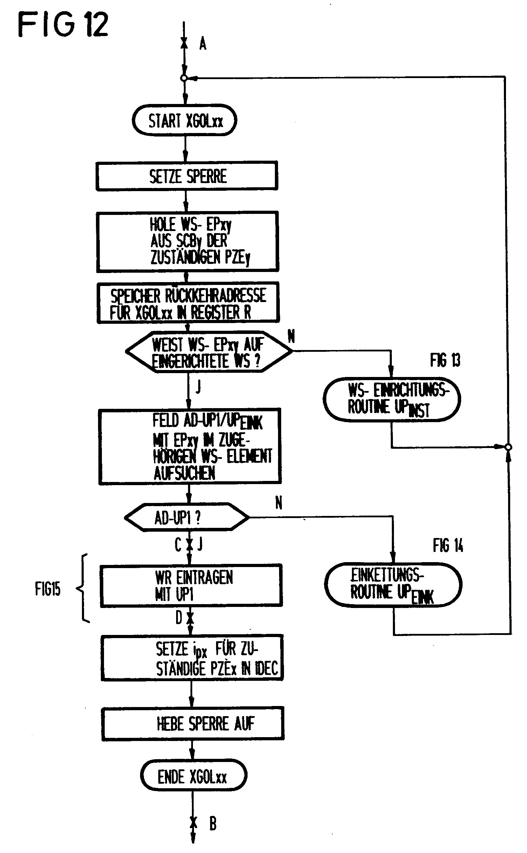

Wird dagegen ein, einen Arbeitsaufruf für einen anderen Prozeß veranlassender Aufrufbefehl XGOLxx erkannt, dann wird das Unterprogramm zur Ausführung des Befehls XGOLxx mit Eintragung des Arbeitsaufrufes in die zugehörige Warteschlange aufgerufen. Dieser Unterprogramm ergibt sich aus FIG 12.

Um zu verhindern, daß infolge zwischenzeitlich auftretender Unterbrechungsanforderungen der Arbeitsaufruf nicht sicher abgesetzt werden kann, wird das Unterprogramm durch Setzen einer Sperre gegen mögliche Unterbrechungen gesichert. Danach wird aus dem XGOLxx-Befehl die Priorität PRIO_{PROZ} des aufzurufenden Prozesses ermittelt und in Verbindung mit der Priorität PRIO_{ABS} und gegebenenfalls unter Berücksichtigung der Priorität PRIO_{ZIEL} entsprechend FIG 3 die Adresse WS-AD der zuständigen Warteschlange gebildet und mit dieser Adresse der zugehörige Eintragszeiger WS-EPxy im zugehörigen Systemkontrollblock SCB_{y} der für den laufenden Prozeß zuständigen Prozeßebenen PZEy aufgesucht. Gleichzeitig wird der erreichte Befehlszählerstand in einem Register R gesichert.

Weist der Eintrag für den aufgesuchten Eintragszeiger WS-PZxy auf eine noch nicht eingerichtete Warteschlange hin, wird die entsprechende zentrale Einrichtungsroutine UP_{INST} aufgerufen und der mit START XGOLxx eingeleitete Programmlauf wiederholt.

Ist bereits eine Warteschlange eingerichtet, wird das durch den Eintragszeiger EPxy bezeichnete Speicherelement in der bereits beschriebenen Weise angesteuert und der Programmlauf anhand der im Steuereintragsfeld vorhandenen Unterprogrammadresse fortgesetzt. Weist diese auf die zentrale Einkettungsroutine UP_{EINK}, weil kein Speicherelement mehr frei ist, wird zunächst ein weiteres Speicherelement in die Warteschlange eingekettet und dann der mit START XGOLxx eingeleitete Programmlauf ebenfalls wiederholt. Im anderen Falle wird anhand des im freien Speicherelement enthaltenen Eintragungsunterprogrammes UP1 der Arbeitsaufruf WR eingetragen. Danach wird dann anhand der gesicherten Rücksprungadresse der Programmlauf fortgesetzt und die Eingliederung des Arbeitsaufrufes WR in die Warteschlange als Unterbrechungsereignis iₚₓ in der Einrichtung IDEC angezeigt. Der Programmlauf zur Ausführung des Aufrufbefehles XGOLxx ist damit beendet, so daß die Sperre wieder aufgehoben und der unterbrochene Prozeßlauf von FIG 11 fortgesetzt werden kann.

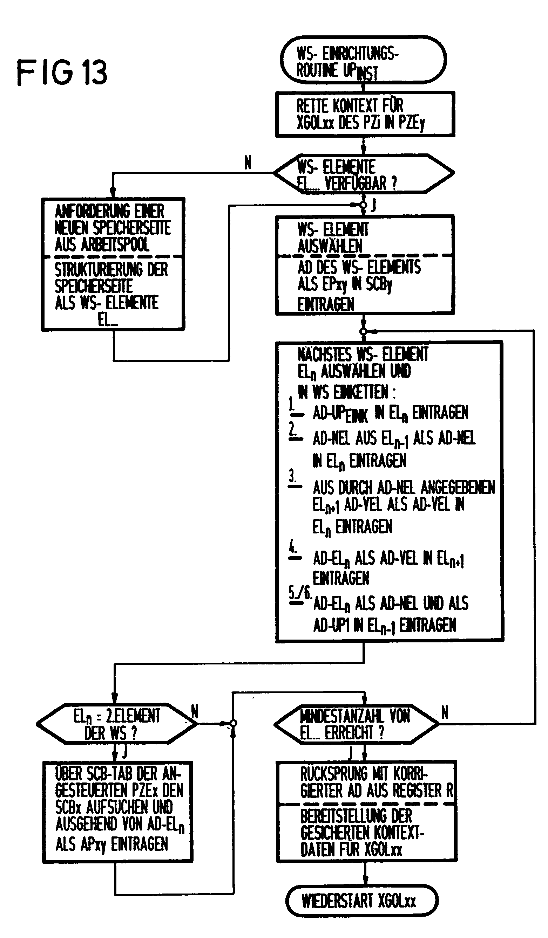

Die Einrichtungsroutine UP_{INST} für die Installation einer noch nicht existierenden Warteschlange ist in FIG 13 ebenfalls in Form eines Flußlaufdiagrammes dargestellt. Diese Routine kann zwangsläufig entfallen, wenn von vornherein alle notwendigen Warteschlangen eingerichtet worden sind.

Im Gegensatz zum normalen Programmlauf gemäß FIG 12 ist zu Beginn dieser Routine eine Kontextsicherung notwendig, da wegen der vielfältigen Adressenverknüpfungen mehr Register benötigt werden, als normalweiser frei verfügbar sind. Danach wird zunächst geprüft, ob im Speicherpool noch strukturierte Speicherelemente zur Verfügung stehen. Ist das nicht der Fall, muß erst eine neue Datenseite angefordert und in dieser die Speicherelemente aufgebaut werden, bevor ein Speicherelement ausgewählt und die zugehörige Adresse als Eintragszeiger EPxy in den Systemkontrollblock SCBy der durch den auslösenden Prozeß PZi bestimmten Prozeßebene PZEy eingetragen werden kann.

Ausgehend von diesem ersten Speicherelement der Warteschlange wird dann, wie anhand von FIG 5 und FIG 8 beschrieben ein weiteres Speicherelement ELn ausgewählt und eingekettet. Beim jeweils zweiten Element der einzurichtenden Warteschlange wird außerdem der von der Adresse dieses Elementes abgeleitete Austragszeiger APxy in den zugehörigen Systemkontrollblock SCBx der angesteuerten Prozeßebene PZEx eingetragen. Dieser Vorgang wiederholt sich, bis die vorgegebene Mindestanzahl von Kettengliedern erreicht ist. Danach wird der gesicherte Befehlszählerstand um einen konstanten Wert vermindert, um die Rücksprungadresse für den Wiederstart des XGOLxx-Programmlaufes zu erhalten, sowie der benötigte Kontext wieder hergestellt und der unterbrochene Programmlauf erneut gestartet.

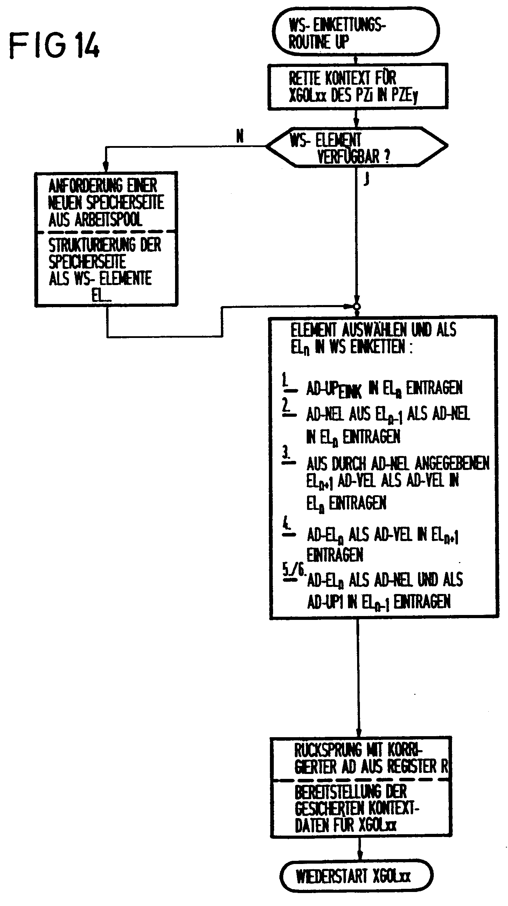

In ähnlicher Weise läuft die in FIG 14 dargestellte Einkettungsroutine UP_{EINK} ab. Betroffen ist in diesem Fall nur ein Element, so daß der Auswählvorgang mit Einkettungsverknüpfung nur einmal ausgeführt wird. Außerdem entfallen die Einträge für den Eintragszeiger EPxy und den Austragszeiger APx.

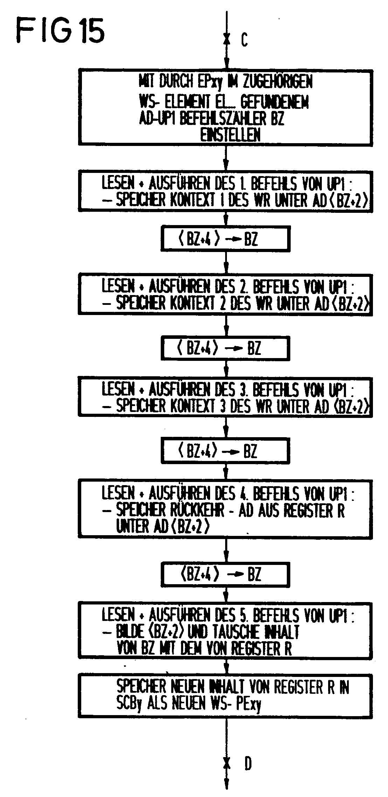

Den normalen Eintragungsprogrammlauf entsprechend dem Eintragungsunterprogramm UP1 in FIG 12 gibt das in FIG 15 gezeigte Flußdiagramm wieder. Mit der durch den Eintragszeiger EPxy in einem der Speicherelemente gefundenen Unterprogrammadresse AD-UP1 wird der Befehlszähler BZ eingestellt. Danach werden nacheinander die im zugehörigen Speicherelement enthaltenen Befehle in der anhand von FIG 10 bereits beschriebenen Weise abgearbeitet, indem aus dem jeweiligen Befehlszählerstand durch erhöhen um die Befehlslänge die Adresse AD BZ+2 für die jeweils einzuschreibenden Informationsteile KONTEXT1 bis KONTEXT3 zum Arbeitsaufruf WR und die gesicherte Rücksprungadresse sowie durch Erhöhen um die jeweilige Datenlänge die Adresse AD BZ+4 für den jeweils nächsten Befehl gebildet wird. Mit dem letzten Befehl wird dann der Befehlszähler auf das Steuereintragsfeld eingestellt und der neue Inhalt des Befehlszählers gegen die auf den nächsten Befehl des XGOLxx-Programmlaufes ausgerichtete, gesicherte Rücksprungadresse ausgetauscht, so daß der Rest des in FIG 12 dargestellten Programmlaufes ausgeführt werden kann.

Handelt es sich bei dem auszuführenden Aufrufbefehl XGOLxx um einen Befehl, der anstelle des Grundtyps einen anderen Aufbautyp des Speicherelementes verlangt, dann umfaßt der Rest des Programmlaufes von FIG 12 noch weitere entsprechende Befehle, mit denen die zusätzlichen Informationen in das Speicherelement eingetragen werden. Danach muß dann der den zugehörigen Aufbautyp festlegende Eintrag TYP entsprechend angepaßt werden, bevor die gesetzte Sperre wieder aufgehoben und der gerade zuständige Prozeß PZi fortgesetzt werden kann.

Die durch Aufrufbefehle XGOLxx eines laufenden Prozesses bedingte Eintragung von Arbeitsaufrufen in die jeweilige Warteschlange und die Anzeige dieses Ereignisses als Unterbrechungsanforderung erfolgt also jeweils unter der Aufsicht des veranlassenden Prozesses ohne die bei vielen bekannten Betriebssystemen notwendige Umschaltung auf ein zentrales Betriebsprogramm. Der entsprechende Unterprogrammlauf ist dabei frei von irgendwelchen prioritätsbedingten Ordnungsaufgaben bei der Einreihung des Arbeitsaufrufes in die jeweilige Warteschlange, da für jede Prioritätsstufung eine eigene Warteschlange vorgesehen ist, deren direkte Auswahl anhand des vorgegebenen Adressenschemas möglich ist, und da alle Warteschlangen nach dem FIFO-Prinzip arbeiten, also alle Arbeitsaufrufe in der eingetragenen Reihenfolge wieder ausgetragen werden. Auch ist abgesehen von der gegebenenfalls notwendig werdenden Einrichtung oder Erweiterung einer Warteschlange und abgesehen von der Ansteuerung eines Speicherelementes des erweiterten Aufbautyps die Dauer des Eintragungsvorganges für die überwiegende Anzahl von Arbeitsaufrufen gleich und damit eine bei der Auslegung der Datenverarbeitungsanlage für den jeweiligen Anwendungsfall genau kalkulierbare Größe. Weiterhin führt die Einbettung des normalen Eintragungsunterprogrammes UP1 in den normalen Programmablauf für die Bearbeitung des jeweiligen Aufrufbefehles XGOLxx ohne zeitraubenden Kontextwechsel und die gewählte Modifizierung der Befehlsadressen, derzufolge der Eintragszeiger EPxy und die Adresse für den Start des jeweiligen Eintragungsunterprogrammes UP1 identisch sind, dazu, daß der jeweils zu durchlaufende kritische Programmpfad sehr kurz wird. Dadurch wird die Wiederfreigabe der jeweils belegten gemeinsamen Betriebsmittel beschleunigt, so daß diese effektiver genutzt werden können.

Wie bereits erwähnt, erfolgt eine Umsteuerung auf die Betriebsprogramme zur Behandlung von Prozeßaufrufen und Unterbrechungsanforderungen nur bei Vorliegen der Signale RLC und INT. Wird eine Unterbrechungsanforderung durch die Einrichtung IDEC von FIG 1 mit dem Signal INT zur Behandlung freigegeben, so wird demzufolge auf das Betriebsprogramm BP umgesteuert, wobei ein gegebenenfalls gerade laufender Prozeß unterbrochen wird. Der dadurch ausgelöste Programmlauf ergibt sich aus dem Flußdiagramm von FIG 16.

Danach wird zunächst geprüft, um welche Art Unterbrechung es sich handelt, sowie die durch die Unterbrechung betroffene Prozeßebene ermittelt und ein Hinweis auf die Prozeßebene des unterbrochenen Prozesses abgespeichert. Bei einer nicht programmbedingten Unterbrechung wird anschließend anhand des dem Anforderungssignal zugeordneten Adressenzeigers der angeforderte Prozeß unmittelbar aufgerufen und die Anzeige des zugehörigen Ereignisses i_{hy} zurückgesetzt. Außerdem wird die Prioritätsmaske in der Einrichtung IDEC auf die Prozeßebene des neuen Prozesses eingestellt und dieser durch Abgabe der Steuerung gestartet. Dieser Ablauf ist im linken oberen Teil von FIG 16 dargestellt.

Bei einer programmbedingten Unterbrechung wird dagegen zunächst die Gruppenanzeige iₚₓ in der Einrichtung IDEC gelöscht und eine Sperre gesetzt, damit die nachfolgend einzuleitende Überprüfung des zugehörigen Warteschlangensystems nicht durch eine andere Unterbrechung beeinträchtigt werden kann. Danach wird die erste Warteschlange mit der höchsten Prioritätseinstufung auf das Vorliegen eines Arbeitsaufrufes überprüft. Ist sie leer und handelt es sich nicht um die letzte Warteschlange des Warteschlangesystems, wird auf die Warteschlange mit der nächstniedrigeren Prioritätseinstufung umgeschaltet und für diese die Prüfung wiederholt usw., bis ein Arbeitsaufruf in einer der Warteschlangen gefunden wird. Der gefundene Arbeitsaufruf wird aus der Warteschlange ausgetragen. Gleichzeitig wird in der Einrichtung IDEC die Anzeige des zugehörigen Ereignisses iₚₓ wieder gesetzt und die Prioritätsmaske auf die mitgeteilte Priorität PRIOM der zugehörigen Prozeßebene eingestellt. Danach wird der angeforderte Prozeß aufgerufen und geprüft, ob er noch existent ist. Ist dies der Fall, wird die gesetzte Sperre wieder aufgehoben und der neue Prozeß gestartet. Andernfalls wird der Arbeitsaufruf für den nicht existenten Prozeß übergangen und gegebenenfalls eine Meldung für den Supervisor SVC abgesetzt.

Der Fortgang des Steuerungsablaufes ist dann derselbe, als wenn bei der Überprüfung des Warteschlangensystems die letzte Warteschlange überprüft und kein Arbeitsaufruf in dieser gefunden wird. Die Überprüfung des Warteschlangensystems ist damit abgeschlossen, so daß die gesetzte Sperre gegen Unterbrechung wieder aufgehoben werden kann.

Damit hat das steuernde Betriebsprogramm BP einen Ablaufzustand erreicht, der die Übergabe der Steuerung an einen anderen Prozeß erlaubt. Der Anstoß hierzu kann in üblicher Weise durch eine von einem laufenden Prozeß ausgelöste Meldung RLC, gleichgültig ob dieser Prozeß durch eine programmbedingte Unterbrechungsanforderung ausgelöst worden war oder nicht, sowie durch die nach Austragung eines Arbeitsaufrufes aus einer Warteschlange infolge des erneuten Setzens der Anzeige iₚₓ erzwungene Überprüfung des Warteschlangensystems mit Erreichen der letzten Warteschlange ohne Auffinden eines weiteren Arbeitsaufrufes oder durch Meldung an den Supervisor SVC verursacht werden. In jedem Falle wird die Prioritätsmaske in der Einrichtung IDEC auf die Priorität der Prozeßebene oberhalb der des zuletzt unterbrochenen Prozesses zurückgesetzt, so daß unabhängig von der Vorgeschichte des Prozeßlaufes noch vorliegende oder inzwischen eingetroffenen Unterbrechungsanforderungen höherer Priorität über das Signal INT erfaßt werden, bevor ein gegebenenfalls unterbrochener Prozeß wieder aufgerufen und fortgesetzt wird.

Bei einer vorher an den Supervisor SVC abgegebenen Meldung würde diese wegen der sehr hohen Priorität der zugehörigen Prozeßebene zum Tragen kommen. Bei einem aus einer Warteschlange ausgetragenen Arbeitsaufruf würde wegen der dabei erneut gesetzten Anzeige iₚₓ diese erneut zum Tragen kommen, auch wenn zwischenzeitlich eine vorrangigere Prozeßebene zu bedienen wäre, so daß mit Sicherheit alle durch dasselbe Ereignis iₚₓ angezeigten Arbeitsaufrufe des Warteschlangensystems erfaßt werden und erst durch das Nichtwiederaufleben der Anzeige iₚₓ aus dem Überprüfungsmechanismus des Warteschlangensystems ausgestiegen werden kann.

Nur wenn nach Herabsetzten der Prioritätsmaske zur Freigabe von angezeigten Unterbrechungsereignissen zur Behandlung das Signal INT ausbleibt, wird ein gegebenenfalls unterbrochener Prozeß in der nächst niedrigeren Prozeßebene wieder aufgerufen und fortgesetzt und damit über die Markierung E1 im linken unteren Teil von FIG 16 auf den Prozeßablauf von FIG 11 übergeleitet.

Das Heruntersetzen der Prioritätsmaske führt schließlich zur Freigabe der untersten Prozeßebene PZE7, in der beispielsweise die vorhandenen Anzeigen für Unterbrechungsereignisse durch Abtasten in zyklischer Folge auf das Vorliegen eines Unterbrechugnsereignisses überwacht werden, wenn keine Prozeßebene mit höherer Priorität zu bedienen ist. Diese zyklische Überprüfung auf der untersten Prozeßebene kann gleichzeitig als Leerlauf des Systems behandelt werden, was eine zusätzliche Prozeßebene für den Leerlauf erübrigt.

Wie aus dem Flußdiagramm von FIG 16 ersichtlich ist, wird der kritische Programmpfad des Unterbrechungsbehandlungsprogrammes bei programmierten Unterbrechungen im wesentlichen durch den, die Entnahme des zwischengespeicherten Arbeitsaufrufes aus der zuständigen Warteschlange steuernden Programmabschnitt E→F bestimmt. Da das laufende Betriebsprogramm BP normalerweise nicht unterbrechbar ist, stehen für diese Zeit die belegten gemeinsamen Betriebsmittel für die Nutzerprozesse nicht zur Verfügung. Durch hochpriore Unterbrechungsereignisse bedingte Prozesse können daher, auch wenn sie nur kurze Zeit beanspruchen, nicht sofort aufgerufen werden, sondern müssen warten, bis das Betriebsprogramm sie aufruft. Auf echtzeitkritische Ereignisse kann daher vielfach nicht zeitgerecht reagiert werden. Das ist insbesondere dann von Nachteil für die Leistungsfähgigkeit der Datenverarbeitungsanlage, wenn die durch echtzeitkritische Unterbrechungsereignisse auszulösenden hochprioren Prozesse im wesentlichen dazu dienen, Arbeitsaufrufe für weniger zeitkritische Prozesse abzusetzen.

Um daher die Reaktionsfähigkeit der Datenverarbeitungsanlage zu steigern und um darüberhinaus die Vorteile der neuen, nur kurze Zeit beanspruchenden Eintragungsprozedur für die Arbeitsaufrufe voll für die Leistungssteigerung der Datenverarbeitungsanlage nutzen zu können, wird der die Austragung eines Arbeitsaufrufes bewirkende Programmteil E→F in FIG 16 in einzelne Programmabschnitte unterteilt und zwischen diesen Programmabschnitten die Entgegennahme von hochprioren Unterbrechungsanforderungen ermöglicht, die gegebenenfalls Arbeitsaufrufe für andere Prozesse auslösen können.

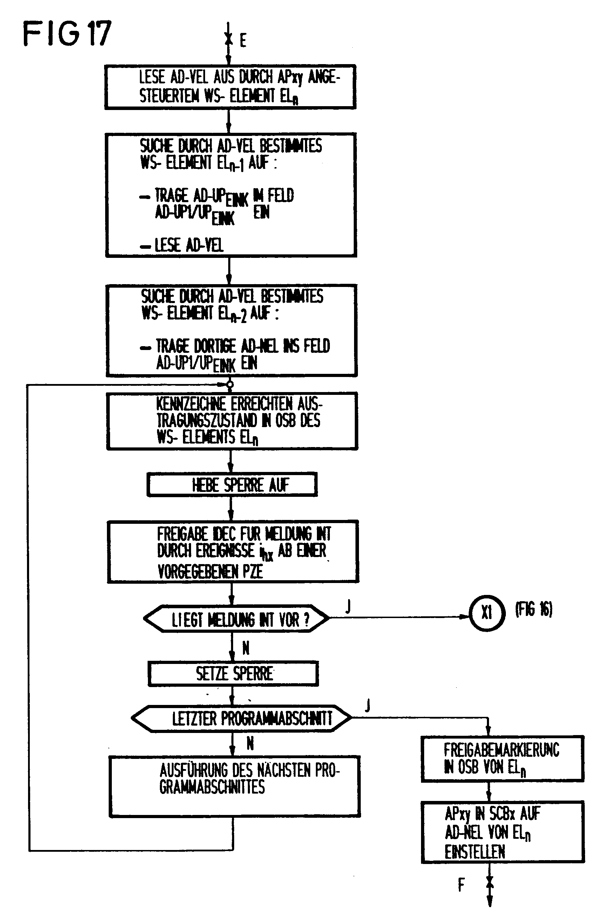

FIG 17 zeigt eine ausführlichere Darstellung des Programmteiles E→F. Danach wird im ersten Programmabschnitt die bereits erwähnte Weitergabe des Sperreintrags zum nächstfolgenden Speicherelement der Warteschlange vorgenommen, indem im durch den Austragszeiger APxy gekennzeichneten Speicherelement ELn anhand des Adresseneintrags AD-VEL das Speicherelement ELn-1 ermittelt und dort der Sperreintrag auf die Adresse AD-UP_{EINK} für die Einkettungsroutine UP_{EINK} eingestellt wird. Weiterhin wird anhand des dortigen Adresseneintrags AD-VEL das Speicherelement ELn-2 ermittelt und dort der Sperreintrag durch den Eintrag AD-UP1 ersetzt, der dem Adresseneintrag AD-NEL in diesem Speicherelement entspricht. Das Speicherelement ELn-2 ist damit, wie bereits erläutert, frühzeitiger für die Entgegennahme einer Zwischenspeicherungsanforderung bereit.

Die Ausführung des ersten Programmabschnittes wird dann durch entsprechende Änderungen des Eintrags OSB im Speicherelement gekennzeichnet, und es wird die gesetzte Sperre wieder aufgehoben. Das Betriebsprogramm BP ist damit für die Entgegennahme von Unterbrechungsmeldungen INT bereit.

Damit nun nicht jede Unterbrechungsmeldung in einer höherprioren Prozeßebene als der, für die das Betriebsprogramm gerade einen Arbeitsaufruf austrägt, zum Zuge kommt, wird durch entsprechende Einstellung der Prioritätsmaske PRIOM in der Überwachungseinrichtung IDEC von FIG 1 die Entgegennahme nur für Unterbrechungsmeldungen oberhalb einer vorgegebenen Prozeßebene ermöglicht, z.B. für Unterbrechungsmeldungen INT oberhalb der Prozeßebene PZE3, um in der Prozeßebene PZE2 eine durch eine Blockendeerkennung ausgelöste Hardwareunterbrechungsmeldung entgegennehmen zu können (FIG 2).

Liegt keine Unterbrechungsmeldung INT vor, wird das Austragungsprogramm nach erneutem Setzen der Sperre anhand des vorliegenden Befehlszählerstandes mit dem nächsten Programmabschnitt fortgesetzt. Ist es noch nicht der letzte Programmabschnitt, wird am Ende desselben wieder der erreichte Austragszustand im Eintrag OSB gekennzeichnet und die Sperre wieder aufgehoben, um erneut Unterbrechungsmeldungen INT entgegennehmen zu können, usw., bis der letzte Programmabschnitt erreicht wird, mit dem dann das Speicherelement im Eintrag OSB als frei gekennzeichnet und der Austragszeiger APxy anhand des Adresseneintrags AD-NEL im Systemkontrollblock SCB... der zugehörigen Prozeßebene PZE... auf das nächste Speicherelement eingestellt wird. Danach wird der in FIG 16 aufgezeigte Programmlauf fortgesetzt.

Wird dagegen nach Beendigung eines solchen Programmabschnittes in Folge der Entsperrung eine Unterbrechungsmeldung INT angezeigt, dann wird auf dem durch X1 gekennzeichneten Weg auf die anhand von FIG 16 bereits erläuterte Behandlung von Unterbrechungsmeldungen INT durch das Betriebsprogramm BP übergeleitet und der unterbrochene Austragungsprozeß erst wieder fortgesetzt, wenn entsprechend FIG 16 nach Eintreffen einer Meldung RLC von einem dabei aufgerufenen Prozeß keine weitere Unterbrechungsmeldung INT ermittelt wird.

Die meist durch eine Hardwaremeldung ausgelöste Unterbrechung des laufenden Austragungsprogrammes kann von sehr unterschiedlicher Dauer sein. Dies ist davon abhängig, ob durch den ersten zugelassenen Prozeß Arbeitsaufrufe an Prozesse von Prozeßebenen ausgelöst werden, die oberhalb der vom unterbrochenen Austragungsprogramm bedienten Prozeßebene liegen. Ist letzteres der Fall, werden auch alle diese Prozesse erst gestartet und das Austragungsprogramm zum Austragen der zugehörigen Arbeitsaufrufe herangezogen, wobei es jedesmal mit den der jeweiligen Prozeßebene zugeordneten allgemeinen Registern zusammenarbeitet, so daß der Kontext immer gesichert bleibt.

Anstelle der anhand von FIG 17 erläuterten vorübergehenden Freigabe durch zwischenzeitliches Aufheben der gesetzten Sperre kann das Austragungsprogramm sich jeweils auch mit einer Meldung RLC freisetzen. In diesem Fall ist aber die Freigabe durch Setzen einer entsprechenden programmierten Anforderung iₚₓ in der Überwachungseinrichtung IDEC zu kennzeichnen, damit der noch nicht voll ausgetragene Arbeitsaufruf registriert und ansteuerbar bleibt. Außerdem wird zweckmäßig in dem anhand von FIG 9 erläuterten Kopffeld KF für die Austragszeigertabelle im zugehörigen Systemkontrollblock SCB... der Austragszeiger AP... für das beim unterbrochenen Austragsvorgang angesteuerte Speicherelement hinterlegt und so auf einen unterbrochenen Austragungsvorgang hingewiesen. Dadurch brauchen beim Wiederansteuern der Warteschlangen dieser Prozeßebene nicht erst alle Warteschlangen nacheinander überprüft zu werden, sondern der unterbrochene Austragungsprozeß kann unmittelbar anhand des im Kopffeld KF eingetragenen Austragszeigers wieder aufgenommen werden. Die Fortsetzung des Austragungsprogrammes erfolgt dann anhand der Einträge TYP und OSB.

In FIG 17 sind die Funktionen der einzelnen Programmabschnitte mit Ausnahme des ersten und des letzten Programmabschnittes nicht näher erläutert. Die Anzahl und die Funktionen der weiteren auszuführenden Programmabschnitte können abhängig vom jeweiligen Aufbautyp des Speicherelementes, der durch den Eintrag TYP gekennzeichnet ist, verschieden sein. So kann z.B. beim Grundtyp des Speicherelementes ein weiterer Programmabschnitt die Austragung der den jeweiligen Arbeitsaufruf direkt betreffenden Informationsteile bewirken, wenn dieser nicht mit dem letzten Programmabschnitt zu einem Programmabschnitt zusammengefaßt wird. Andere Programmabschnitte können sich beispielsweise auf die Berechnung der für den aufzurufenden Prozeß zutreffenden Prozeßstartnummer der Datenverarbeitungsanlage oder auf gesonderte Tests und Programmrückverfolgungen anhand der gespeicherten Zusatzinformationen beziehen. Für die Gestaltung der einzelnen Programmabschnitte bezüglich der mit einem Austragungsvorgang gekoppelten Funktionen bestehen daher vielfältige Realisierungsmöglichkeiten, um die durch die einzelnen Programmabschnitte bedingten kritischen Programmpfade möglichst klein zu halten.

## Patentansprüche

1. Verfahren zur Behandlung der von den einzelnen Prozessen einer Datenverarbeitungsanlage verursachten Arbeitsaufrufe an einen der Prozesse, wobei die Arbeitsaufrufe in eine der Prozeßebene des aufzurufenden Prozesses zugeordnete Warteschlange eingetragen werden, in einer Datenverarbeitungsanlage
- mit mehreren, nach Prioritäten gestaffelten Prozeßebenen (PZE0...PZE7), denen die aufrufbaren Prozesse entsprechend ihrer durch die einzuhaltenden Realzeitbedingungen vorgegebenen Priorität zugeordnet sind und denen in gleicher Weise nach Prioritäten unterteilte Unterbrechungsebenen für Arbeitsaufrufe an die Prozesse kennzeichnende Ereignisse, die system- oder programmbedingt sein können, entsprechen, wobei programmbedingte Arbeitsaufrufe in Warteschlangen (WS-ME, WS-SVC) eingereiht werden,
- mit Mitteln (IDEC) zur Überwachung und Bewertung der Prioritätseinstufung der einen Arbeitsaufruf für einen der Prozesse kennzeichnenden Ereignisse und
- mit Mitteln zur Weiterleitung des Arbeitsaufrufes mit der jeweils höchsten Prioritätseinstufung an den zugehörigen Prozeß bei gegebenenfalls gleichzeitiger Unterbrechung eines früher durch einen Arbeitsaufruf niedriger Prioritätseinstufung ausgelösten laufenden Prozesses,
**dadurch gekennzeichnet,**
- daß für die Zwischenspeicherung von Arbeitsaufrufen (WR) in den einzelnen Prozeßebenen (z.B. PZE0 bis PZE7) wenigstens in einer der Prozeßebenen (z.B. PZE4) ein System von mehreren, nach dem FIFO-Prinzip arbeitenden Warteschlangen (WS...) verwendet wird, von denen jede Warteschlange nur Arbeitsaufrufe derselben Prioritätseinstufung aufnimmt und anhand des den Arbeitsaufruf veranlassenden Aufrufbefehles (XGOLxx) unmittelbar identifizierbar ist,
- daß die Eintragung der einzelnen Arbeitsaufrufe (WR) in die Warteschlangen dieses Warteschlangensystems durch den den Arbeitsaufruf jeweils veranlassenden Prozeß (PZi) erfolgt,
- daß die die jeweilige Warteschlange bildenden Speicherelemente (EL...) jeweils einen, durch einen Eintragszeiger (EPxy) unmittelbar ansteuerbaren Steuereintrag (AD-UP1/UP_{EINK}) aufweisen, der bei einem mit einem Arbeitsaufruf (WR) belegbaren nachfolgenden Speicherelement auf das Startfeld eines in jedem Speicherelement (EL...) enthaltenen Eintragungsunterprogrammes (UP1) für die Eintragung des jeweiligen Arbeitsaufrufes (WR) zeigt, in das das den Aufrufbefehl (XGOLxx) ausführende Programm verzweigt wird,
- daß am Ende des jeweiligen Eintragungsunterprogrammes (UP1) der erreichte Befehlszählerstand durch Modifikation auf das Steuereintragsfeld dieses Speicherelementes ausgerichtet wird und dieser Zählerstand als neuer Eintragszeiger (EPxy) der Warteschlange gesichert wird, bevor das den Aufrufbefehl (XGOLxx) ausführende Programm fortgesetzt wird,
- daß bei Behandlung die Austragung und Weiterleitung eines in einer Warteschlange zwischengespeicherten Arbeitsaufrufes (WR) an den zugehörigen Prozeß durch einen aus mehreren, jeweils nicht unterbrechbaren kurzen Programmabschnitten gebildeten Teil des Betriebsprogrammes (BP) ausgeführt wird und
- daß zwischen den Programmabschnitten jeweils die Entgegennahme von Unterbrechungsmeldungen (INT) hochpriorer zeitkritischer Prozesse zum Absetzen von Arbeitsaufrufen an niederpriore Prozesse durch Freigabe der Mittel (IDEC) für die Überwachung der Unterbrechungsereignisse ermöglicht wird.

2. Verfahren nach Anspruch 1,
**dadurch gekennzeichnet,**
- daß bei einem, einen Arbeitsaufruf veranlassenden Befehl (XGOLxx) des jeweils laufenden Prozesses (PZi) der Eintragszeiger (EPxy) der zugehörigen Warteschlange (WSxy) aufgesucht und die Rückkehradresse für diesen Befehl gesichert wird,
- daß über den Eintragszeiger (EPxy) das zugehörige Speicherelement (EL...) der entsprechenden Warteschlange (WSxy) angesteuert und anhand des gelesenen Steuereintrags (AD-UP1/UP_{EINK}) der Befehlszähler des laufenden Prozesses eingestellt wird,
- daß durch zyklisches Weiterschalten des Befehlszählers das im angesteuerten Speicherelement (EL...) abgespeicherte Unterprogramm (UP1) abgearbeitet wird und dabei nacheinander entsprechend den aufeinanderfolgenden Befehlen die die Informationen (z.B. C, AR0, AR1) zum Arbeitsaufruf und sonstige Steuerinformationen aufnehmenden Eintragsfelder angesteuert und die zugehörigen Informationsteile eingeschrieben werden,
- daß mit dem jeweils letzten Befehl des Eintragungs-Unterprogrammes der um eine Konstante erhöhte und als Adresse auf den Steuereintrag (AD-UP1/UP_{EINK}) des Speicherelementes (EL...) zeigende Befehlszählerstand mit dem Inhalt des die Rücksprungadresse enthaltenden Registers ausgetauscht wird, so daß das ursprüngliche, durch den den Arbeitsaufruf veranlassenden Befehl (XGOLxx) ausgelöste Programm fortgesetzt werden kann und
- daß im weiteren Verlauf dieses Programmes der vor dem Rücksprung gesicherte Befehlszählerstand des Eintragungsunterprogrammes (UP1) als neuer Eintragszeiger (EPxy) für die Warteschlange abgespeichert wird.

3. Verfahren nach Anspruch 2,
**dadurch gekennzeichnet,** daß die Befehle des im Speicherelement (EL...) jeweils abgespeicherten Eintragungsunterprogrammes (UP1) und die zugehörigen Eintragsfelder für die jeweiligen Informationsteile (z.B. C, AR0, AR1) einander abwechseln, wobei die Adresse für das jeweils auf einen Befehl folgende Eintragsfeld aus dem jeweils um die Befehlslänge erhöhten Befehlszählerstand und die Adresse für den jeweils nächsten Befehl aus dem jeweils um die Datenlänge erhöhten Befehlszählerstand ableitbar ist, so daß der nach dem letzten Befehl um die Befehlslänge erhöhte Befehlszählerstand unmittelbar auf das Steuereintragsfeld des Speicherelementes (EL...) zeigt.

4. Verfahren nach einem der Ansprüche 1 bis 3,
**dadurch gekennzeichnet,** daß bei nicht mit einem Arbeitsaufruf belegbaren nachfolgenden Speicherelement (EL...) aufgrund des dann im Steuereintragsfeld enthaltenen Eintrags (AD-UP_{EINK}) zur Sonderbehandlung der Eintragungsvorgang abgebrochen wird.

5. Verfahren nach einem der Ansprüche 1 bis 3,
**dadurch gekennzeichnet,**
- daß die Warteschlangen (WS...) aus, durch in Vorwärts- und Rückwärtsrichtung verweisende Adresseneinträge (AD-NEL, AD-VEL) zu einer Ringkette verknüpften Speicherelementen (z.B. EL1 bis EL3) eines Speicherpools gebildet werden,
- daß bei nicht mit einem Arbeitsaufruf belegbaren nachfolgenden Speicherelement (z.B. EL1) aufgrund des dann im Steuereintragsfeld enthaltenen Eintrags (AD-UP_{EINK}) zur Sonderbehandlung in eine Einkettungsroutine (UP_{EINK}) zur Einkettung eines neuen Speicherelementes (z.B. EL4) in die Warteschlange mit Sicherung der Daten für das laufende Programm übergeleitet wird,
- daß beim Einketten des neuen Speicherelementes (EL4) im Steuereintragsfeld dieses Speicherelements ein Eintrag (AD-UP_{EINK}) auf Sonderbehandlung eingetragen und ins Steuereintragsfeld des die Einkettung auslösenden Speicherelementes (EL1) der Adresseneintrag (AD-NEL) aus dem dortigen Adresseneintragsfeld für die Vorwärtsverknüpfung übernommen wird und
- daß anschließend in das ursprüngliche Programm zurückgesprungen und der durch den Aufrufbefehl (XGOLxx) veranlaßte Eintragungsvorgang wiederholt wird.

6. Verfahren nach einem der Ansprüche 1 bis 5,
**dadurch gekennzeichnet,** daß die Warteschlangen (z.B. WSxy) jeweils erst bei der ersten Anforderung für den Eintrag eines Arbeitsaufrufes (WR) gebildet werden, daß die Überleitung in eine entsprechende zentrale Einrichtungsroutine (UP_{INST}) durch einen den Eintragszeiger (EPxy) ersetzenden Hinweis bewirkt wird und daß nach Einrichtung der Warteschlange in das ursprüngliche Programm zurückgesprungen und der durch den Aufrufbefehl (XGOLxx) veranlaßte Eintragungsvorgang wiederholt wird.

7. Verfahren nach einem der Ansprüche 1 bis 6,
**dadurch gekennzeichnet,**
- daß beim Wirksamwerden von Unterbrechungsmeldungen (INT) an das Betriebsprogramm (BP) für programmierte Unterbrechungsanforderungen (iₚₓ), zu denen Arbeitsaufrufe (WR) in den Warteschlangen (z.B. WSxy) zwischengespeichert sind, in der zugehörigen Prozeßebene (PZEx) der Austragszeiger (APxy) für die zugehörige Warteschlange (WSxy) ermittelt und das dadurch gekennzeichnete Speicherelement (z.B. EL2) angesteuert wird,
- daß am Ende eines jeden Programmabschnittes des die Austragung und Weiterleitung eines Arbeitsaufrufes steuernden Teiles des Betriebsprogrammes (BP) der jeweils erreichte Austragungszustand im durch den Austragszeiger (APxy) ansteuerbaren ersten Eintragsfeld (Teil OSB) des Speicherelementes gekennzeichnet wird,
- daß zwischen diesen Programmabschnitten jeweils die Entgegennahme von Unterbrechungsmeldungen (INT) hochpriorer, zeitkritischer Prozesse (z.B. Blockendebehandlung der Zeichenkanäle) zum Absetzen von Arbeitsaufrufen an niederpriore Prozesse durch Freigabe der Unterbrechungsüberwachung (IDEC) für die zugehörige Prozeßebene (z.B. PZE2 = ZBH) ermöglicht wird,
- daß bei Auftreten einer Unterbrechungsmeldung (INT) zunächst der zugehörige Prozeß aufgerufen wird,
- daß nach einer entsprechenden Rückmeldung des aufgerufenen Prozesses an das Betriebsprogramm (BP) in üblicher Weise das Vorliegen weiterer Unterbrechungsmeldungen (INT) der vorgegebenen Mindestpriorität (PRIOM) überprüft wird usw., bis schließlich keine Unterbrechungsmeldung mehr vorliegt und das unterbrochene Austragungsprogramm mit dem nächsten Programmabschnitt fortgesetzt werden kann und
- daß nach Durchlaufen des letzten Programmabschnittes das Speicherelement als frei gekennzeichnet und der Austragszeiger (APxy) auf das nächstfolgende belegte Speicherelement eingestellt wird.

8. Verfahren nach Anspruch 7,
**dadurch gekennzeichnet,** daß während eines der Programmabschnitte die Eintragsfelder für die zum verarbeitenden Arbeitsaufruf gehörenden Informationsteile (z.B. C, AR0, AR2) nacheinander gelesen werden und daß in einem anderen Programmabschnitt der im Steuereintragsfeld des das bisherige Ende der Warteschlange bildenden Speicherelements (EL1) enthaltene Eintrag (AD-UP_{EINK}) auf Sonderbehandlung auf das nächstfolgende Speicherelement (z.B. EL2) übertragen wird.

9. Verfahren nach Anspruch 8,
**dadurch gekennzeichnet,** daß die Übertragung des Eintrags (AD-UP_{EINK}) auf Sonderbehandlung auf das jeweils nächstfolgende Speicherelement (EL...) jeweils im ersten Programmabschnitt des Austragungsprogrammes vorgenommen wird.

10. Verfahren nach Anspruch 8 oder 9,
**dadurch gekennzeichnet,**
- daß zur Übertragung des Eintrags (AD-UP_{EINK}) auf Sonderbehandlung an das nächstfolgende Speicherelement (z.B. EL2) anhand des im durch den Austragsspeicher (APxy) gekennzeichneten Speicherelement (EL3) enthaltenen Adresseneintrags (AD-VEL) für die Rückwärtsverknüpfung das zugehörige Speicherelement (EL2) aufgesucht und in dessen Steuereintragsfeld der vorhandene Eintrag durch den Eintrag (AD-UP_{EINK}) für die Sonderbehandlung ersetzt wird und
- daß anhand des im Adresseneintragsfeld für die Rückwärtsverknüpfung dieses Speicherelements (EL2) enthaltenen Adressen
eintrags (AD-VEL) das durch diesen Eintrag gekennzeichnete vorangehende Speicherelement (EL1) aufgesucht, der dortige Adresseneintrag (AD-NEL) für die Vorwärtsverknüpfung in das dortige Steuereintragsfeld eingetragen und damit das nachfolgende Speicherelement (EL2) für die Entgegennahme eines Arbeitsaufrufes (WR4) verfügbar wird.

11. Verfahren nach einem der Ansprüche 1 bis 10,
**dadurch gekennzeichnet,**
- daß abhängig vom Umfang der zusätzlich zu den, den eigentlichen Arbeitsaufruf (WR) ausmachenden Informationsteilen (z.B. D, AR0, AR1) in ein Speicherelement (EL...) einzutragenden Zusatzinformationen (XX, BZS2, PRIDABS, PRIDEM) verschiedene Aufbautypen von Speicherelementen (EL...) verwendet werden,
- daß der jeweils benötigte Aufbautyp durch einen zusätzlichen, zusammen mit dem den Belegungs- und Austragungszustand kennzeichnenden Eintrag (OSB) durch den Austragszeiger (APxy) ansteuerbaren Eintrag (TYP) gekennzeichnet wird,
- daß dieser Eintrag (TYP) im Rahmen des Eintragungsunterprogrammes (UP1) für den eigentlichen Arbeitsaufruf immer auf den Grundtyp eingestellt und anschließend nach Einspeicherung der Zusatzinformationen auf den für den jeweiligen Aufbautyp abgeändert wird und
- daß beim Austragen und Weiterleiten eines Arbeitsaufrufes anhand des Eintrags (TYP) für den jeweiligen Aufbautyp das diesem entsprechende Austragungsprogramm ausgewählt wird.

## Claims

1. Method for handling job calls, caused by the individual processes of a data processing system, to one of the processes, in which the job calls are entered in a queue assigned to the process level of the process to be called, in a data processing system
- having a plurality of process levels (PZE0 ... PZE7) graded according to priorities to which the callable processes are assigned in accordance with their priority predetermined by the real-time conditions to be fulfilled, and to which events, which may be system-related or program-related, that signify interrupt levels, divided according to priorities in the same way, for job calls to the processes correspond, program-related job calls being entered in queues (WS-ME, WS-SVC),
- having means (IDEC) for monitoring and evaluating the priority level of the events signifying a job call for one of the processes, and
- having means for forwarding the job call having the highest priority level in each case to the associated process, if necessary with simultaneous interruption of a current process initiated earlier by a job call having a lower priority level,
characterised
- in that a system of a plurality of queues (WS...) operating according to the FIFO principle is used at least in one of the process levels (for example PZE4) for the temporary storage of job calls (WR) in the individual process levels (for example PZE0 to PZE7), of which each queue only accepts job calls having the same priority level and can be identified directly on the basis of the call instruction (XGOLxx) invoking the job call,
- in that the entry of the individual job calls (WR) into the queues of said queue system is effected by the respective process (PZi) invoking the job call,
- in that the memory elements (EL...) forming the respective queue have in each case a control entry (AD-UP1/UP_{EINK}) which can be addressed directly by an entry pointer (EPxy), and which, in the case of a subsequent memory element that can be occupied by a job call (WR), points to the start field of an entry subroutine (UP1) contained in every memory element (EL...) for the entry of the respective job call (WR), into which subroutine the program executing the call instruction (XGOLxx) is branched,
- in that at the end of the respective entry subroutine (UP1) the instruction counter reading reached is aligned by modification with the control entry field of said memory element and said counter reading is saved as the new entry pointer (EPxy) of the queue before the program executing the call instruction (XGOLxx) is continued,
- in that in the case of handling, the removal and forwarding of a job call (WR), temporarily stored in a queue, to the associated process is executed by a part of the operating program (BP) formed by a plurality of short program sections that cannot be interrupted in each case, and
- in that the acceptance of interrupt messages (INT) of high-priority time-critical processes for the removal of job calls to lower-priority processes is made possible between the program sections in each case by releasing the means (IDEC) for the monitoring of the interrupt events.

2. Method according to Claim 1, characterised
- in that in the case where an instruction (XGOLxx) of the respective current process (PZi) invokes a job call, the entry pointer (EPxy) of the associated queue (WSxy) is sought and the return address for said instruction is saved,
- in that the associated memory element (EL...) of the corresponding queue (WSxy) is addressed via the entry pointer (EPxy) and the instruction counter of the current process is set on the basis of the control entry (AD-UP1/UP_{EINK}) read,
- in that the subroutine (UP1) stored in the memory element (EL...) addressed is processed by cyclical incrementing of the instruction counter, and in doing so the entry fields accepting the information (for example C, AR0, AR1) for the job call and other control information are addressed successively in accordance with the successive instructions, and the associated information parts are written in,
- in that, with the respective last instruction of the entry subroutine, the instruction counter reading that was incremented by a constant and is pointing to the control entry (AD-UP1/UP_{EINK}) of the memory element (EL...) as address is swapped with the contents of the register containing the return address, so that the original program initiated by the instruction (XGOLxx) invoking the job call can be continued, and
- in that in the further course of said program, the instruction counter reading of the entry subroutine (UP1) saved before the return branch is stored as new entry pointer (EPxy) for the queue.

3. Method according to Claim 2, characterised in that the instructions of the entry subroutine (UP1) stored in the memory element (EL...) in each case and the associated entry fields for the respective information parts (for example C, AR0, AR1) alternate with one another, it being possible to derive the address for the entry field following an instruction in each case from the instruction counter reading that has been incremented by the instruction length in each case, and it being possible to derive the address for the respective next instruction from the instruction counter reading that has been incremented by the data length in each case, so that the instruction counter reading that was incremented by the instruction length after the last instruction points directly to the control entry field of the memory element (EL...).

4. Method according to one of Claims 1 to 3, characterised in that, in the case of a subsequent memory element (EL...) that cannot be occupied by a job call, as a result of the entry (AD-UP_{EINK}) then contained in the control entry field, termination occurs for special handling of the entry process.

5. Method according to one of Claims 1 to 3, characterised
- in that the queues (WS...) are formed from memory elements (for example EL1 to EL3) of a memory pool combined to form a ring chain by address entries (AD-NEL, AD-VEL) pointing in forwards and reverse direction,
- in that in the case of a subsequent memory element (for example EL1) that cannot be occupied by a job call, as a result of the entry (AD-UP_{EINK}) then contained in the control entry field, branching occurs for special handling into a chaining routine (UP_{EINK}) for chaining a new memory element (for example EL4) into the queue with saving of the data for the current program,
- in that during chaining of the new memory element (EL4), an entry (AD-UP_{EINK}) for special handling is entered in the control entry field of said memory element, and the address entry (AD-NEL) is transferred into the control entry field of the memory element (EL1) initiating the chaining from the address entry field there for the forward chaining, and
- in that a branch is subsequently made back into the original program and the entry operation invoked by the call instruction (XGOLxx) is repeated.

6. Method according to one of Claims 1 to 5, characterised in that the queues (for example WSxy) are formed in each case only upon the first request for the entry of a job call (WR), in that the switchover into a corresponding central installation routine (UP_{INST}) is effected by a message replacing the entry pointer (EPxy), and in that after the queue has been set up, a branch is made back into the original program and the entry operation invoked by the call instruction (XGOLxx) is repeated.

7. Method according to one of Claims 1 to 6, characterised
- in that upon the activation of interrupt messages (INT) to the operating program (BP) for programmed interrupt requests (iₚₓ), for which job calls (WR) are temporarily stored in the queues (for example WSxy), the removal pointer (APxy) for the associated queue (WSxy) is determined in the associated process level (PZEx), and the memory element (for example EL2) indicated thereby is addressed,
- in that at the end of each program section of the part of the operating program (BP) controlling the removal and forwarding of a job call, the removal status reached in each case is indicated in the first entry field (part OSB) of the memory element that can be addressed by the removal pointer (APxy),
- in that in each case the acceptance of interrupt messages (INT) of high-priority time-critical processes (for example end-of-block handling of the signal channels) for the removal of job calls to low-priority processes is made possible between said program sections in each case by releasing the interrupt monitoring means (IDEC) for the associated process level (for example PZE2 = ZBH),
- in that following the occurrence of an interrupt message (INT), first of all the associated process is called,
- in that after a corresponding acknowledgement of the called process to the operating program (BP), the presence of further interrupt messages (INT) having the predetermined minimum priority (PRIOM) is checked in the usual manner, etc., until finally there are no more interrupt messages present and the interrupted removal program can be continued with the next program section, and
- in that after the execution of the last program section, the memory element is indicated as being free and the removal pointer (APxy) is set to the next occupied memory element.

8. Method according to Claim 7, characterised in that the entry fields for the information parts (for example C, AR0, AR2) associated with the processing job call are successively read during one of the program sections, and in that in another program section the entry (AD-UP_{EINK}) contained in the control entry field of the memory element (EL1) that previously formed the end of the queue is transferred to the next memory element (for example EL2) for special handling.

9. Method according to Claim 8, characterised in that the transfer of the entry (AD-UP_{EINK}) to the respective next memory element (EL...) for special handling is performed in the first program section of the removal program in each case.

10. Method according to Claim 8 or 9, characterised
- in that for transferring the entry (AD-UP_{EINK}) to the next memory element (for example EL2) for special handling, the associated memory element (EL2) is sought on the basis of the address entry (AD-VEL) for the backwards chaining contained in the memory element (EL3) indicated by the removal memory (APxy), and the existing entry is replaced by the entry (AD-UP_{EINK}) for the special handling in the control entry field thereof, and
- in that on the basis of the address entry (AD-VEL) contained in the address entry field for the backwards chaining of said memory element (EL2), the preceding memory element (EL1) indicated by this entry is sought, the address entry (AD-NEL) there for the forwards chaining is entered in the control entry field there, and consequently the following memory element (EL2) is available to accept a job call (WR4).

11. Method according to one of Claims 1 to 10, characterised
- in that various structure types of memory elements (EL...) are used depending on the extent of the additional information (XX, BZS2, PRIDABS, PRIDEM) to be entered in a memory element (EL...) in addition to the information parts (for example D, AR0, AR1) forming the actual job call (WR),
- in that the structure type required in each case is indicated by an additional entry (TYP) that can be addressed by the removal pointer (APxy) together with the entry (OSB) indicating the occupation and removal status,
- in that, in the course of the entry subroutine (UP1), said entry (TYP) is always set to the basic type for the actual job call and subsequently modified to that for the respective structure type after storage of the additional information, and
- in that, on the basis of the entry (TYP) for the respective structure type, the removal program corresponding thereto is selected during the removal and forwarding of a job call.

## Revendications

1. Procédé pour traiter les appels de travail déclenchés par les différents processus d'une installation de traitement de données, à l'un des processus, les appels de travail étant insérés dans une file d'attente associée au plan du processus devant être appelé, dans une installation de traitement de données comportant
- plusieurs plans de processus (PZE0...PZE7) ayant des priorités échelonnées et auxquels les processus devant être appelés sont associés en fonction de leur priorité prédéterminée par les conditions en temps réel devant être respectées et auxquels, de la même manière, correspondent des plans d'interruptions subdivisés en fonction de priorités, pour des évènements, qui caractérisent des appels de travail envoyés aux processus et qui peuvent être conditionnés en fonction du système ou d'un programme, des appels de travail conditionnés en fonction d'un programme étant rangés dans des files d'attente (WS-ME, WS-SVC),
- des moyens (IDEC) pour contrôler et évaluer le classement de priorité des évènements caractérisant un appel de travail pour l'un des processus,
- des moyens pour retransmettre l'appel de travail avec le classement de priorité respectivement maximum au processus associé dans le cas d'une interruption éventuellement simultanée d'un processus en cours déclenché antérieurement par un appel de travail ayant un classement de priorité inférieur,
caractérisé en ce
- que pour la mémorisation intermédiaire d'appels de travail (WR) dans les différents plans de processus (par exemple PZE0 à PZE7), au moins dans l'un des plans de processus (par exemple PZE4), on utilise un système de plusieurs files d'attente (WS...) qui travaille selon le principe FIFO et dont chacune reçoit uniquement des appels de travail possédant le même classement de priorité et peut être identifiée directement en fonction de l'instruction d'appel (XGOLxx) déclenchant l'appel de travail,
- que l'introduction des différents appels de travail (WR) dans les files d'attente de ce système à files d'attente est exécutée au moyen du processus (PZi) qui déclenche respectivement l'appel de travail,
- que les éléments de mémoire (EL...), qui constituent la file d'attente respective, possèdent respectivement une entrée de commande (AD-UP1/UP_{EINK}), pouvant être commandée directement par un pointeur d'entrée (EPxy) et qui, dans le cas d'un élément de mémoire suivant pouvant être occupé par un appel de travail (WR), indique la zone de départ d'un sous-programme d'introduction (UP1) contenu dans chaque élément de mémoire (EL...), pour l'introduction de l'appel de travail respectif (WR), en lequel se ramifie le programme exécutant l'instruction d'appel (XGOLxx),
- qu'à la fin du sous-programme respectif d'introduction (UP1), l'état de comptage d'instructions atteint est aligné par modification sur la zone d'entrée de commande de cet élément de mémoire, et cet état de comptage est protégé en tant que nouveau pointeur d'entrée (EPxy) de la file d'attente, avant la poursuite du programme exécutant l'instruction d'appel (XGOLxx),
- que lors du traitement, la sortie et la retransmission d'un appel de travail (WR), mémorisé temporairement dans une file d'attente, au processus associé est exécutée au moyen d'une partie du programme de service (BP), formée par plusieurs sections courtes de programme, qui ne peuvent pas être respectivement interrompues, et
- qu'entre les sections du programme, respectivement la réception de signalisations d'interruption (INT) de processus critiques dans le temps et ayant une priorité élevée est possible pour transférer des appels de travail à des processus à priorité inférieur, par libération des moyens (IDEC) pour le contrôle des évènements d'interruption.

2. Procédé suivant la revendication 1, caractérisé par le fait
- que, dans le cas d'une instruction (XGOLxx), qui déclenche un appel de travail, du processus (PZi) respectivement en cours, le pointeur d'entrée (EPxy) de la file d'attente associée (WSxy) est recherché et l'adresse de renvoi pour cette instruction est protégée,
- que l'élément de mémoire associé (EL...) de la file d'attente correspondante (WSxy) est commandé par l'intermédiaire du pointeur d'entrée (EPxy) et que le compteur d'instructions du processus en cours est réglé sur la base de l'entrée lue de commande (AD-UP1/UP_{EINK}),
- que grâce à l'avance cyclique du compteur d'instructions, le sous-programme (UP1) mémorisé dans l'élément de mémoire commandé (EL...) est traité et que successivement, en fonction des instructions successives, les zones d'entrée, qui reçoivent les informations (par exemple C, AR0, AR1) pour l'appel de travail et d'autres informations de commande, sont commandées et que les éléments d'information associés sont enregistrés,
- qu'avec la dernière instruction respective du sous-programme d'entrée, l'état de comptage d'instructions, qui est accru d'une constante et désigne en tant qu'adresse l'entrée de commande (AD-UP1/UP_{EINK}) de l'élément de mémoire (EL...) est échangé avec le contenu du registre contenant l'adresse de saut de retour de sorte que le programme initial déclenché par l'instruction (XGOLxx) déclenchant l'appel de travail, peut se poursuivre, et
- que, lors de la poursuite ultérieure de ce programme, l'état du compteur d'instructions du sous-programme d'entrée (UP1), protégé vis-à-vis du saut de retour, est mémorisé en tant que nouveau pointeur d'entrée (EPxy) pour la file d'attente.

3. Procédé suivant la revendication 2, caractérisé par le fait que les instructions du sous-programme d'entrée (UP1) mémorisées respectivement dans l'élément de mémoire (EL...) et les zones associées d'entrée pour les éléments respectifs d'information (par exemple C, AR0, AR1) alternent entre elles, l'adresse pour la zone d'entrée, qui succède respectivement à une instruction, pouvant être tirée de l'état de comptage d'instructions accru respectivement de la longueur d'instruction, tandis que l'adresse pour l'instruction immédiatement suivante peut être tirée de l'état de comptage d'instructions accru respectivement de la longueur des données, de sorte que l'état de comptage d'instructions, accru de la longueur d'instruction après la dernière instruction, indique directement la zone d'entrée de commande de l'élément de mémoire (EL...).

4. Procédé suivant l'une des revendications 1 à 3, caractérisé par le fait que dans le cas d'un élément de mémoire suivant (EL...), qui ne peut pas être occupé avec un appel de travail, est interrompu sur la base de l'entrée (AD-UP_{EINK}) contenue alors dans la zone d'entrée de commande, pour le traitement particulier du processus d'entrée.

5. Procédé suivant l'une des revendications 1 à 3, caractérisé par le fait
- que les files d'attente (WS...) sont formées à partir d'éléments de mémoire (par exemple EL1 à EL3) d'un module de mémoire réunis pour former une chaîne en anneau au moyen d'entrées d'adresses (AD-NEL, AD-VEL) qui indiquent le sens direct ou le sens rétrograde,
- que dans le cas où un élément de mémoire suivant (par exemple EL1) ne peut pas être occupé par un appel de travail, sur la base de l'entrée (AD-UP_{EINK}) contenue alors dans la zone d'entrée de commande, pour le traitement particulier, un transfert est exécuté dans un sous-programme de chaînage (UP_{EINK}) pour réaliser le chaînage d'un nouvel élément de mémoire (par exemple EL4) dans la file d'attente avec protection des données pour le programme en cours,
- que lors du chaînage du nouvel élément de mémoire (EL4), une entrée (AD-UP_{EINK}) pour un traitement particulier est exécutée dans la zone d'entrée de commande de cet élément de mémoire, et l'entrée d'adresse (AD-NEL) est transférée dans la zone d'entrée de commande de l'élément de mémoire déclenchant le chaînage, à partir de la zone d'entrée d'adresses présente dans cet élément, pour la liaison dans le sens direct, et
- qu'ensuite, un saut en retour au programme initial est exécuté et l'opération d'entrée est déclenchée par l'instruction d'appel (XGOLxx) est répétée.

6. Procédé suivant l'une des revendications 1 à 5, caractérisé par le fait que les files d'attente (par exemple WSxy) sont formées uniquement lors de la première demande d'entrée d'un appel de travail (WR), que la retransmission dans un sous-programme central correspondant d'introduction (UP_{INST}) est déclenchée par une indication remplaçant le pointeur d'entrée (EPxy) et qu'après l'introduction dans la file d'attente, un saut en retour au programme initial est exécuté et l'opération d'entrée déclenchée par l'instruction d'appel (XCOLxx) est répétée.

7. Procédé suivant l'une des revendications 1 à 6, caractérisé par le fait
- que lorsque des signalisations d'interruption (INT) deviennent actives, dans le programme de service (BP) pour des demandes programmées d'interruption (iₚₓ), pour lesquelles des appels de travail (WR) sont mémorisés temporairement dans les files d'attente (par exemple WSxy), le pointeur de sortie (APxy) pour la file d'attente associée (WSxy) est déterminé dans le plan associé de processus (PZEx) et que l'élément de mémoire (par exemple EL2) caractérisé de ce fait est commandé,
- qu'à la fin de chaque section de la partie du programme de service (BP), qui commande la sortie et la retransmission d'un appel de travail, l'état de sortie respectivement atteint est caractérisé dans la première zone d'entrée (partie OSB) de l'élément de mémoire, qui peut être commandée par le pointeur de sortie (APxy),
- qu'entre ces sections du programme, respectivement la réception de signalisations d'interruptions (INT) de processus critiques dans le temps et à priorité élevée (par exemple le traitement de fin de bloc des canaux de transmission de signaux) est possible pour la réduction des appels de travail envoyés à des processus de priorité inférieure, par libération du contrôle d'interruption (IDEC) pour le plan associé de processus (par exemple PZE2 = ZBH),
- que lors de l'apparition d'une signalisation d'interruption (INT), tout d'abord le processus associé est appelé,
- qu'après une signalisation en retour correspondante du processus appelé au programme de service (BP), la présence d'autres signalisations d'interruptions (INT) possédant la priorité minimale prédéterminée (PRIOM) est contrôlée de façon usuelle, etc., jusqu'à ce que finalement aucune signalisation d'interruption ne soit plus présente et que le programme de sortie interrompu puisse être poursuivi avec la section suivante du programme, et
- qu'après l'exécution de la dernière section du programme, l'élément de mémoire est caractérisé comme étant libre et le pointeur de sortie (APxy) est réglé sur l'élément de mémoire occupé immédiatement suivant.

8. Procédé suivant la revendication 7, caractérisé par le fait que pendant l'une des sections de programme, les zones d'entrée pour les parties d'informations (par exemple C, AR0/AR2) associées à l'appel de travail en cours de traitement sont lues successivement et que dans une autre section du programme, l'entrée (AD-UP_{EINK}), contenue dans la zone d'entrée de commande de l'élément de mémoire (EL1) constituant la fin, existant jusqu'alors, de la file d'attente, est transmise, dans un traitement particulier, à l'élément de mémoire immédiatement suivant (par exemple EL2).

9. Procédé suivant la revendication 8, caractérisé par le fait que la retransmission de l'entrée (AD-UP_{EINK}) lors d'un traitement particulier à l'élément de mémoire immédiatement suivant (EL...), est exécutée respectivement dans la première section du programme de sortie.

10. Procédé suivant la revendication 8 ou 9, caractérisé par le fait
- que pour la transmission de l'entrée (AD-UP_{EINK}), lors d'un traitement particulier, un élément de mémoire immédiatement suivant (par exemple EL2), l'élément de mémoire associé (EL2) est recherché sur la base de l'entrée d'adresses (AD-VEL), contenue dans l'élément de mémoire (EL3) caractérisé par la mémoire de sortie (APxy), pour la liaison en sens inverse, et que l'entrée présente est remplacée, dans la zone d'entrée de commande de cet élément, par l'entrée (AD-UP_{EINK}) pour le traitement spécial, et
- que c'est sur la base de l'entrée d'adresses (AD-VEL) contenue dans la zone d'entrée d'adresses pour la liaison inverse de cet élément de mémoire (EL2), qu'est recherché l'élément de mémoire précédent (EL1), caractérisé par cette entrée, que l'entrée d'adresses (AD-NEL) présente dans cet élément est introduite, pour la liaison dans le sens direct, dans la zone d'entrée de commande présente dans cet élément et que par conséquent l'élément de mémoire suivant (EL2) est disponible pour la réception d'un appel de travail (WR4).

11. Procédé suivant l'une des revendications 1 à 10, caractérisé par le fait
- qu'on utilise différents types de construction d'éléments de mémoire (EL1...) en fonction du volume des informations supplémentaires (XX, BZS2, PRIDABS, PRIDEM) devant être introduites dans un élément de mémoire (EL...) en plus des éléments d'informations (par exemple D, AR0, AR1) formant l'appel de travail proprement dit (WR),
- que le type de construction respectivement nécessaire est caractérisé par une entrée supplémentaire (TYP) pouvant être commandée, conjointement avec l'entrée (OSB) caractérisant l'état d'occupation et de sortie, par le pointeur de sortie (APxy),
- que cette entrée (TYP) est réglée toujours sur le type de base dans le cadre du sous-programme d'entrée (UP1) pour l'appel de travail proprement dit et est ensuite modifiée après mémorisation des informations supplémentaires, sur l'entrée prévue pour le type de construction respectif, et
- que lors de la sortie et de la retransmission d'un appel de travail, c'est sur la base de l'entrée (TYP) pour le type de construction respectif qu'est choisi le programme de sortie correspondant à cette entrée.
